(19) Europäisches Patentamt
European Patent Office
Office européen des brevets

(11) **EP 2 199 063 B1**

(12) **EUROPÄISCHE PATENTSCHRIFT**

(45) Veröffentlichungstag und Bekanntmachung des Hinweises auf die Patenterteilung:
**24.05.2017 Patentblatt 2017/21**

(21) Anmeldenummer: **09178098.1**

(22) Anmeldetag: **04.12.2009**

(51) Int Cl.:
*B29C 65/50* (2006.01)   *C09J 7/00* (2006.01)
*H01C 7/02* (2006.01)   *H05B 3/34* (2006.01)
*H05B 3/58* (2006.01)   *H05B 3/14* (2006.01)
*H05B 3/18* (2006.01)

(54) **Beheiztes Flächenelement und Verfahren zu seiner Befestigung**

Heated area element and method for fixing same

Elément de surface chauffé et son procédé de fixation

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.12.2008 DE 102008063849**

(43) Veröffentlichungstag der Anmeldung:
**23.06.2010 Patentblatt 2010/25**

(73) Patentinhaber: **tesa SE**
**22848 Norderstedt (DE)**

(72) Erfinder:
• **Ellringmann, Ute, Dr.**
  **22523 Hamburg (DE)**

• **Dietz, Bernd**
  **22949 Ammersbek (DE)**
• **Domann, Frank**
  **25436 Uetersen (DE)**
• **Junghans, Monika**
  **22457 Hamburg (DE)**
• **Keite-Telgenbüscher, Klaus, Dr.**
  **22529 Hamburg (DE)**
• **Dominikat, Udo**
  **24999 Wees (DE)**

(56) Entgegenhaltungen:
EP-A1- 2 148 337   DE-A1-102007 007 617
FR-A- 1 323 543   US-A- 5 864 280

**Beschreibung**

Die Erfindung betrifft ein Flächenelement mit einer Vorderseite und einer Rückseite, das eine Heizschicht und eine Kontaktierungsschicht umfasst, wobei die Heizschicht aus einer intrinsisch erwärmbaren Selbstklebemasse besteht, die als bei Hindurchleiten eines elektrischen Stroms sich erwärmender Leiter ausgebildet ist, und wobei die Kontaktierungsschicht als ein zumindest im Wesentlichen flächenförmig ausgebreitetes und von Aussparungen durchbrochenes Kontaktierungselement ausgebildet ist und eine erste Seitenfläche sowie eine zweite Seitenfläche aufweist, wobei die Kontaktierungsschicht über die erste Seitenfläche mit der Heizschicht in Kontakt steht und mit dieser elektrisch leitend verbunden ist sowie die Verwendung dieses Flächenelements. Die Erfindung betrifft ferner ein Verfahren zum Verbinden eines derartigen Flächenelements mit einem Verklebungssubstrat.

In vielen Bereichen werden zum Beheizen von Gegenständen oder Räumen Elektroheizungen eingesetzt. In Elektroheizungen wird Wärme als thermische Energie durch Umwandlung von elektrischer Energie (einschließlich magnetischer Energie) gewonnen. Elektroheizungen können grundsätzlich auf unterschiedlichen technischen Prinzipien beruhen. Neben der Wärmeerzeugung auf der Grundlage von kapazitiven oder induktiven Effekten oder von elektromagnetischer Strahlung haben sich Heizungssysteme durchgesetzt, die Heizwiderstandselemente enthalten (so genannte Widerstandsheizungen). In derartigen Systemen wird die bei Hindurchleiten eines elektrischen Stroms durch das Heizwiderstandselement entstehende Wärmeenergie (Joulesche Wärme) genutzt. Grundsätzlich kann jeder elektrische Leiter als Heizwiderstandselement verwendet werden, der einen von null verschiedenen endlichen Widerstandswert aufweist.

Die Auswahl des Heizwiderstandselements ergibt sich aus der zu erzielenden Wärmeleistung; diese ist von dem Widerstandswert des Heizwiderstandselements und von dem durch das Heizwiderstandselement fließenden elektrischen Strom abhängig und gemäß dem Ohmschen Gesetz somit auch von der anliegenden Spannung. Demzufolge erfolgt die Auswahl des Heizwiderstandselements entsprechend der Beschaffenheit der darin vorhandenen Leitungswege, etwa entsprechend deren Querschnitt, Länge, spezifischen Widerstand und thermischer Belastbarkeit.

Insbesondere in der Automobilindustrie kommen vermehrt Widerstandsheizungen zum Einsatz, beispielsweise zum Beheizen von Autositzen, von Fensterscheiben und von Automobilaußenspiegeln. Um bei derartigen Anwendungen die gewünschte Beheizung zu realisieren, werden im einfachsten Fall Widerstandsdrähte planar verlegt. Andere Systeme weisen als Heizwiderstandselement schichtförmige Leiter auf, zum Beispiel solche aus elektrisch leitenden Polymerschichten. So können etwa an der Rückseite des Spiegelglases eines Automobilaußenspiegels schichtförmige Heizwiderstandselemente verklebt werden, die das Spiegelglas mit einer Trägerplatte im Halter des Automobilaußenspiegels verbinden und über Leiterflächen aus Aluminium großflächig kontaktiert werden. Wird nun eine Spannung an das Heizwiderstandselement angelegt, so heizt sich dieses infolge des Stromflusses auf. Die dabei erzeugte Wärme wird über ein doppelseitiges Haftklebeband auf die Glasoberfläche des Spiegels übertragen und beheizt diesen somit. Auf diese Weise lassen sich auf der Glasoberfläche des Spiegels Temperaturen von 45 °C bis 80 °C erzielen.

Ein derartiges System aus einer Trägerfolie mit Leiterflächen und intrinsisch heizbarer Tinte ist hinreichend, um eine Erwärmung zu erzielen, erfordert aber einen relativ komplizierten Aufbau, da die einzelnen Komponenten des Heizelements nicht nur mit dem Glas des Spiegels verklebt werden müssen, sondern auch mit der Trägerplatte des Spiegels, die in vielen Fällen aus dem Kunststoff Acrylnitril/Butadien/Styrol (ABS) besteht. Die Verklebung dieser unterschiedlichen Materialien stellt dabei besondere Anforderungen an das zu verwendende Klebesystem.

Neben den Aspekten, die ihren Ursprung in den Materialien des jeweiligen Haftgrundes haben, muss ein solches Haftklebeband, das zur Befestigung eines Heizelements an einer Spiegelplatte verwendet wird und das die Wärme vom Heizelement zur Spiegeloberfläche transportiert, nicht nur eine möglichst hohe thermische Leitfähigkeit aufweisen, es muss auch im Hinblick auf die Wärmescherfestigkeit bei erhöhten Temperaturen sowie auf die Witterungsbeständigkeit und Haftklebrigkeit bei tiefen Temperaturen besonders angepasst sein. Dies gilt ebenfalls für eine separate Klebeschicht, die zum Befestigen des Verbundbands aus Trägerfolie und leitfähiger Tinte an der Trägerplatte der Spiegelhalterung vorgesehen sein kann.

Ein solches Verbundband ist jedoch insgesamt nur wenig flexibel und ist daher relativ starr. Das Verbundband haftet auf einem gekrümmten Haftgrund nur schlecht, da die Festigkeit des Verbundbands einer Verformung einen hohen mechanischen Widerstand entgegenbringt. Hierdurch kann es zu einem lokalen oder vollflächigen Ablösen des Heizelements vom Verklebungssubstrat (dem Haftgrund oder Träger) kommen, was die Übertragung der elektrisch erzeugten Wärmeenergie auf das Verklebungssubstrat vermindert oder sogar verhindert.

Zudem kann es passieren, dass ein auf einem Verklebungssubstrat mit gekrümmter Oberfläche verklebtes Verbundband bei Erwärmung des Substrats sich von dem Substrat wieder ablöst, da zusammen mit dem Substrat die Klebemasse des Verbundbandes erwärmt wird und dabei erweicht. Infolge der hohen Eigensteifigkeit konventioneller Verbundbänder kann dies ein Aufspalten der erweichten Klebemasse zur Folge haben, so dass sich diese vom Verklebungssubstrat ablöst. Darüber hinaus beeinträchtigt die Starrheit des Aufbaus herkömmlicher verklebbarer Heizelemente die mechanische Kälteschlagfestigkeit einer Verklebung unterschiedlicher Verklebungssubstrate, etwa eines Spiegels mit einem Spiegelhalter.

Ferner ergibt sich insbesondere bei großen und gewölbten Substratflächen das Problem, dass durch Fertigungstoleranzen (etwa von Spiegelglas und Trägerplatte) differierende Spaltmaße über die Fläche auftreten können, die oft eine vollflächige Klebeverbindung verhindern. In diese Bereiche können dann flüssige oder gasförmige Medien (Fluide) eindringen, beispielsweise Regenwasser oder Kondenswasser, und die Festigkeit der Klebeverbindung weiter herabsetzen.

Dieser Effekt ist insbesondere bei Autorückspiegeln problematisch, die einen einteiligen Spiegel mit einem erweiterten Sichtbereich aufweisen, in denen der Spiegel eine Oberfläche hat, die in zwei Raumrichtungen gekrümmt ist (Weitwinkelspiegel oder Nahbereichsspiegel). Eine Verklebung des Spiegels mit dem verklebbaren Heizelement wird bei einer derartigen Krümmung in zwei Dimensionen durch die starre Trägerfolie verhindert, auf die die Leiterflächenstrukturen aufgebracht sind. Zusätzlich zu der Trägerfolie erschweren auch die Leiterflächen die Verklebung auf einem gekrümmten Substrat, da diese aus vergleichsweise starren Metallschichten, leitfähigen Lacken, Tinten oder Druckfarben bestehen, die bei starkem Biegen oder Dehnen brechen können, so dass der elektrische Kontakt in diesen Systemen nicht zuverlässig gewährleistet ist.

Darüber hinaus ergibt sich bei modernen Automobilaußenspiegelaufbauten das Problem, dass zusätzlich zu dem verklebbaren Heizelement weitere Funktionalitäten im Automobilaußenspiegel realisiert werden sollen (beispielsweise eine elektrochrome Abtönung des Spiegels), deren Umsetzung ebenfalls zur Einbautiefe oder Gesamtstärke des Bauteils beiträgt. Infolge solcher durch die geforderten funktionalen Strukturen immer dickeren Funktions- und Verklebungsaufbauten zwischen dem eigentlichen Spiegelglas und der Trägerplatte wird der Spielraum des Designers bei der Gestaltung des Autospiegels deutlich eingeschränkt und zudem das Gewicht des Automobilaußenspiegels insgesamt vergrößert.

Eine Verbesserung dieser Situation wurde dadurch erzielt, dass in einem Flächenelement zusätzlich zu dem Klebeband auch die elektrisch leitenden Strukturen des Heizelements realisiert sind. Ein derartiges haftklebriges Flächenelement, das intrinsisch erwärmbar ist und die Heizfunktion mit der Haftklebrigkeit verbindet, ist in DE 103 10 722 A1 beschrieben. Als nachteilig hat sich bei diesem Aufbau jedoch herausgestellt, dass die Klebemasse um so stärker an Haftklebrigkeit verliert, je größer der Anteil der elektrisch leitenden Bestandteile an der Klebemasse ist, mittels derer eine Erwärmung der Klebemasse also überhaupt erst möglich wird. Auch bei diesem Aufbau besteht zusätzlich noch das Problem einer zu geringen Flexibilität des Flächenelements, infolge derer die Verlässlichkeit einer Klebeverbindung erheblich herabgesetzt ist. Dies hat wiederum einen verringerten mechanischen, elektrischen und thermischen Kontakt über die Verklebung zur Folge, wodurch die maximal nutzbare Wärmemenge abnimmt und der Wärmeübergang erschwert wird. Aus diesem Grund wurde vorgeschlagen, ein Flächenelement mit einer Kontaktierungsschicht aus einem zumindest im Wesentlichen flächenförmig ausgebreiteten durchbrochenen Kontaktierungselement zu verwenden.

Infolge der flächig-durchbrochenen Ausbildung des Kontaktierungselements erhält dieses eine flexible Beschaffenheit und somit eine erhöhte Bruchfestigkeit. Dabei gewinnt das Kontaktierungselement parallel zu der Hauptausdehnung (Flächenausdehnung, Hauptausdehnungsebene) des Flächenelements an Flexibilität, so dass das Kontaktierungselement bei einer quer zur Hauptausdehnung einwirkenden Kraft beweglich-flexibel ist, ohne unter der so entstehenden mechanischen Spannung zu brechen. Gleichzeitig ist durch die zumindest im Wesentlichen flächenförmige Ausdehnung des Kontaktierungselements sichergestellt, dass der Querschnitt der den elektrischen Strom leitenden Kontaktfläche mit der Heizschicht hinreichend groß ausfällt, um ein großflächiges Erwärmen sicherzustellen und so die Hauptfunktionalität zu gewährleisten. Infolge dieser besonderen Ausbildung darf das erfindungsgemäße Flächenelement keine stabilisierende Trägerfolie aufweisen, die dessen Flexibilität herabsetzen würde. Mit einem derartigen trägerfreien Flächenelement ist es daher möglich, die erwünschte Flexibilität zu erzielen.

Nachteilig an diesen Flächenelementen ist jedoch die schlechte Positionierbarkeit und die fehlende Repositionierbarkeit. So ist es äußerst schwierig, ein derartig flexibles Flächenelement mit dem Haftgrund in Kontakt zu bringen, ohne dass bereits eine stabile Verklebung eingegangen wird. Die Folge davon ist, dass eine exakte Ausrichtung des Flächenelements auf dem Haftgrund vor dem Verkleben nicht ohne weiteres möglich ist (schlechte Positionierbarkeit). Überdies kann das auf dem Haftgrund verklebte trägerfreie Flächenelement vom Haftgrund auch nicht wieder abgelöst werden, ohne dass die Gefahr einer Beschädigung der filigranen Struktur des Kontaktierungselements besteht, so dass dessen Position nachträglich nicht mehr korrigiert werden kann (fehlende Repositionierbarkeit).

Letzteres ist unter anderem die Folge der Abnahme der Eigenstabilität, die mit der drastischen Zunahme der Flexibilität einhergeht. Die verminderte Stabilität ist bei einem Heizelement problematischer als bei einem konventionellen Klebeband, da eine Beschädigung des Flächenelements insgesamt zwangsläufig auch eine Beschädigung der elektrisch leitenden Strukturen dieses Flächenelements zur Folge hat, was dazu führen kann, dass dieses in seiner Heizleistung beeinträchtigt wird oder die Heizfunktionalität sogar vollständig verliert.

Eine Beschädigung des Flächenelements tritt vor allem während der Vorbereitung des Flächenelements für die Verklebung auf. So kann es beispielsweise auch beim Abziehen von Schutzfolien zu einer Zerstörung des Flächenelements kommen. Derartige Schutzfolien bedecken üblicherweise die Klebeflächen des Flächenelements während der Lagerung, um ein unbeabsichtigtes Verkleben im Lagerungszustand zu verhindern. Als Lagerungszustand (Lagerungsform) wird der Zustand eines verklebbaren Flächenelements bezeichnet, in dem dieses vor der späteren Verklebung gelagert wird, also beispielsweise als gestapelte Einzelbögen, als aufgespulte Rolle und dergleichen.

Unmittelbar vor dem Verkleben wird die Schutzfolie von der Klebefläche abgezogen. Aus diesem Grund ist die Oberfläche der Schutzfolie üblicherweise haftvermindernd ausgerüstet, um das Ablösen des Flächenelements von der Schutzfolie zu erleichtern. Jedoch reicht selbst eine derartige Haftungsverminderung in der Praxis nicht aus, um eine Beschädigung des Flächenelements verlässlich zu verhindern, zumal das trägerfreie Flächenelement üblicherweise so dünn wie möglich sein soll.

Die DE 10 2007 007 617 A beschreibt ein Flächengebilde aufweisend zumindest eine Schicht einer Klebemasse, innerhalb derer Wärme erzeugt werden kann, wobei die Klebemasse eine Heißschmelzklebemasse und ein Kaltleiter ist. Das Flächenelement weist eine erste selbstklebende Seitenfläche, eine zweite selbstklebende Seitenfläche sowie eine Schichtabfolge aus einer Heizschicht, einer Kontaktierungsschicht und der Klebemassenschicht auf, Die EP 2 148 337 A beschreibt einen ähnlichen Aufbau, in der die Heizschicht mit einer ersten Seitenfläche der Kontaktierungsschicht in Kontakt steht und mit dieser elektrisch leitend verbunden ist, und in der die Klebemasseschicht mit einer zweiten Seitenfläche der Kontaktierungsschicht in Kontakt steht, und wobei die Heizschicht aus einer intrinsisch erwärmbaren ersten Selbstklebemasse (10) besteht, die als bei Hindurchleiten eines elektrischen Stroms sich erwärmender Kaltleiter ausgebildet ist. Die Klebemasseschicht besteht aus einer zweiten Selbstklebemasse. Die Kontaktierungsschicht ist ein zumindest im wesentlichen flächenförmig ausgebreitetes durchbrochenes Kontaktierungselement. Eine Lösung der sich aus der DE 103 10 722 A1 ergebenden, vorstehend beschriebenen Nachteile wird in beiden Schriften nicht angeboten.

Eine Aufgabe der vorliegenden Erfindung ist es daher, ein beidseitig verklebbares Flächenelement zur Verfügung zu stellen, das diese Nachteile beseitigt und das von einer Schutzfolie beschädigungsfrei ablösbar ist sowie vor dem Verkleben gut positionierbar ist, zudem aber einen einfachen Aufbau geringer Dicke aufweist, so dass es unter ökonomischen und ökologischen Gesichtspunkten günstig hergestellt werden kann. Insbesondere bestand eine Aufgabe darin, ein verbessertes intrinsisch erwärmbares und doppelseitig verklebendes Flächenelement zur Verfügung zu stellen, das eine verringerte Haftung an der Schutzfolie aufweist, ohne dass dadurch die spätere Verklebungsfestigkeit beeinträchtigt wird.

Diese Aufgabe wird überraschend und für den Fachmann in nicht vorhersehbarer Weise durch ein Flächenelement der eingangs genannten Art gelöst, bei dem die zweite Seitenfläche der Kontaktierungsschicht die Vorderseite des Flächenelements bildet und bei dem außerdem die Aussparungen in dem Kontaktierungselement über die Dicke des Kontaktierungselements hindurch durchgängig ausgebildet sind und zumindest im Bereich der zweiten Seitenfläche im Wesentlichen klebemassefrei vorliegen. Dabei ist die erste Seitenfläche zumindest teilweise in die intrinsisch erwärmbare Selbstklebemasse eingebettet.

Dadurch, dass die zweite Seitenfläche der Kontaktierungsschicht die Vorderseite des Flächenelements darstellt, ist sichergestellt, dass im Lagerungszustand an der Vorderseite des Flächenelements allenfalls wenig Selbstklebemasse vorhanden ist. Die dort befindliche Klebemassenmenge wird zudem dadurch stark verringert, dass die Aussparungen in dem Kontaktierungselement außerdem an dieser Stelle im Wesentlichen klebemassefrei vorliegen, das heißt, dass die Aussparungen zumindest im Bereich der zweiten Seitenfläche, die die äußere Vorderseite des Flächenelements bildet, keine oder allenfalls nur wenig Selbstklebemasse enthalten. Hierdurch wird erreicht, dass die Aussparungen an der Vorderseite des Flächenelements nahezu klebemassefrei vorliegen, so dass die an der Vorderseite des Flächenelements befindliche Menge an Selbstklebemasse verringert wird. Damit ist es möglich, das Flächenelement mit dem Haftgrund in Kontakt zu bringen und exakt auszurichten, bevor eine Verklebung erreicht wird. Außerdem wird auch ein etwaiges Anhaften an der Schutzfolie vermindert wird, wodurch es möglich ist, die Schutzfolie vor dem Verkleben ohne Beeinträchtigung der Funktionalität des Flächenelements von diesem abzuziehen.

Infolge der Ausbildung der Aussparungen als durchgängige Öffnungen ist zudem sichergestellt, dass die Selbstklebemasse für ein beidseitiges Verkleben des Flächenelements von der ersten Seitenfläche der Kontaktierungsschicht durch die Aussparungen des Kontaktierungselements hindurch zu der zweiten Seitenfläche hin fließen und dort mit dem Haftgrund in Kontakt treten kann, so dass auch an der im Lagerungszustand nahezu klebemassefreien Vorderseite des Flächenelements infolge der hindurchgetretenen Selbstklebemasse eine hohe Klebkraft gewährleistet ist.

Das allgemeine Prinzip eines beidseitig verklebbaren Flächenelements mit einer nichtklebenden Schicht, die aus einem mit klebemassefreien Aussparungen versehenen flächigen Gebilde besteht, das lediglich an einer seiner beiden Seitenflächen eine Selbstklebemassenschicht aufweist, stellt auch für sich genommen eine Erfindung dar. (Als Klebemassenschicht wird jede Schicht bezeichnet, die eine Klebemasse enthält und zum klebenden Verbinden eines Flächenelements mit einem Haftgrund angepasst ist.) Zu dieser übergeordneten Erfindung (nämlich einem Flächenelement mit einer Vorderseite und einer Rückseite, das jeweils eine Selbstklebemasseschicht und eine Funktionsschicht umfasst, wobei die Funktionsschicht zumindest im Wesentlichen flächenförmig ausgebreitet und von Aussparungen durchbrochen ausgebildet ist und eine erste Seitenfläche sowie eine zweite Seitenfläche aufweist, wobei die Funktionsschicht über die erste Seitenfläche mit der Selbstklebemasseschicht in Kontakt steht, die zweite Seitenfläche der Funktionsschicht die Vorderseite des Flächenelements bildet und dass die Aussparungen in der Funktionsschicht über die Dicke der Funktionsschicht hindurch durchgängig ausgebildet sind und zumindest im Bereich der zweiten Seitenfläche klebemassefrei vorliegen) bildet das zuvor beschriebene Flächenelement seinerseits eine besondere Ausführungsform, in der als nichtklebende Schicht das Kontaktierungselement vorgesehen ist. Die weiteren Merkmale der besonderen Ausführungsformen zu dem erfindungsgemäßen beheizten Flächenelement wie auch dessen allgemeine und spezifischen Beispiele beschreiben daher Weiterbildungen der übergeordneten Erfindung, wobei diese das übergeordnete erfinderische Konzept sowohl in Kombination mit den spezifischen Merkmalen des erfindungsgemäßen Flächenelements (also in einem beheizten Flächenelement) als auch ohne diese spezifischen Merkmale (also in einem allgemeinen nicht beheizten Flächenelement) verwirklichen können. Beispielsweise kann ein beidseitig verklebbares Flächenelement entsprechend dem übergeordneten Konzept auch mit einer nichtklebenden Funktionsschicht (beispielsweise einem Träger) realisiert werden, die aus einem mit klebemassefreien Aussparungen versehenen flächigen Gebilde besteht. Das flächige Gebilde kann dann an lediglich einer seiner beiden Seitenflächen eine Selbstklebemassenschicht aufweisen, in die das flächige Gebilde zumindest teilweise eingebettet ist.

Besonders günstig ist es zur Verwirklichung der Erfindung, wenn die intrinsisch erwärmbare Selbstklebemasse ein Kaltleiter ist. Ein Kaltleiter (PTC-Element) ist ein Heizwiderstandselement, dessen den Strom leitende Bereiche aus einem Material bestehen, das bezüglich seines elektrischen Widerstands einen positiven Temperaturkoeffizienten (englisch: positive temperature coefficient, PTC) aufweist. Somit handelt es sich bei Kaltleitern um den elektrischen Strom leitende Materialien, deren Widerstand mit der Temperatur ansteigt und die somit bei tieferen Temperaturen den Strom besser leiten als bei hohen Temperaturen. Die Verwendung derartiger sich kaltleitend verhaltender Materialien als Heizwiderstandselemente (PTC-Elemente) bietet den Vorteil, dass bei Anlegen einer konstanten Spannung an ein solches Heizelement ein Überhitzen des Heizelements vermieden wird, da bei einem Anstieg der Betriebstemperatur der Widerstand des Heizelements zunimmt, wodurch gemäß dem Ohmschen Gesetz der Strom sich proportional zu der Widerstandszunahme verringert, die insgesamt erreichte Wärmeleistung abnimmt und das Heizelement sich wieder abkühlt. Je nach dem konkreten Anwendungszweck kann eine derartige intrinsische Regelung zur Temperaturbegrenzung anstelle von oder zusätzlich zu einer externen Regelung eingesetzt werden.

Darüber hinaus ist es dienlich, wenn die Selbstklebemasse zusätzlich zu den Merkmalen einer oder mehrerer der vorgenannten Ausbildungen mindestens einen elektrisch leitfähigen Füllstoff umfasst. Auf diese Weise lässt sich besonders einfach und kostengünstig eine elektrisch leitende Klebemasse erhalten, die eine für viele Anwendungen hinreichend hohe Heizleistung bietet. Besonders vorteilhaft ist es dabei, wenn der elektrisch leitende Füllstoff ausgewählt ist aus der Gruppe umfassend Graphit, Kohlenstoff-Nanoteilchen und Ruß, insbesondere Leitruß. Der Vorteil einer solchen Zusammensetzung besteht darin, dass diese Füllstoffe eine besonders gute Verbindung mit der Polymermatrix eingehen, so dass eine derartige Klebemasse insgesamt über eine hohe Kohäsion verfügt und daher mechanisch stark belastbar ist. Hierbei ist es insbesondere überraschend, dass das Fließverhalten einer Selbstklebemasse, die derartige Partikel enthält und somit hochviskos ist, insgesamt noch ausreicht, damit diese Selbstklebemasse durch die Aussparungen in dem Kontaktierungselement hindurchtreten und den benötigten Fließweg zurücklegen kann.

Erfindungsgemäß ist die erste Seitenfläche der Kontaktierungsschicht zumindest teilweise in die intrinsisch erwärmbare Selbstklebemasse eingebettet ist. Auf diese Weise ist sichergestellt, dass die Kontaktierungsschicht an dem Flächenelement nicht erst im Verklebungszustand (der sich von dem Lagerungszustand in erster Linie dadurch unterscheidet, dass die Selbstklebemasse durch die Aussparungen hindurch zu der Vorderseite des Flächenelements hin gelangt und das Kontaktierungselement somit umgibt), sondern bereits im Lagerungszustand fixiert ist, so dass ein unbeabsichtigtes Ablösen des Kontaktierungselements wirkungsvoller verhindert wird. Es ist allerdings auch bei dieser Ausgestaltung darauf zu achten, dass die Aussparungen mindestens im Bereich der zweiten Seitenfläche zumindest im Wesentlichen klebemassefrei vorliegen.

Von Vorteil ist es dabei, wenn die Dicke des Kontaktierungselements höchstens 50 $\mu$m beträgt oder sogar höchstens 20 $\mu$m beträgt. Bei einer derartigen Dicke ist gewährleistet, dass die Selbstklebemassen beim Verkleben des Flächenelements durch die Kontaktierungsschicht hindurch fließen und die Aussparungen des Kontaktierungselements vollständig ausfüllen kann, um so ein Maximum an Verklebungsfestigkeit zu bieten.

Darüber hinaus hat es sich als günstig herausgestellt, wenn die Aussparungen mindestens 25 % der Fläche der ersten Seitenfläche der Kontaktierungsschicht ausmachen, bevorzugt mehr als 50 % der Fläche der ersten Seitenfläche der Kontaktierungsschicht oder sogar mehr als 75 % der ersten Seitenfläche der Kontaktierungsschicht. Auf diese Weise ist die Durchtrittsfläche für die Selbstklebemasse hinreichend groß, um eine hochfeste Verklebung zu ermöglichen. Für Anwendungen, in denen eine besonders hohe Festigkeit nicht erforderlich ist, können die Aussparungen auch eine geringere Fläche einnehmen; beispielsweise können bei mechanisch nur schwach belasteten Verbindungen die Aussparungen lediglich 10 % der Fläche der ersten Seitenfläche der Kontaktierungsschicht ausmachen.

Gemäß einer besonderen Ausbildung kann das durchbrochene Kontaktierungselement stegförmige Bereiche aufweisen. Hierdurch wird die Flexibilität der Kontaktierungsschicht und damit auch die des Flächenelements insgesamt in der Hauptausdehnungsebene erhöht (insbesondere quer zur Ausrichtung der stegförmigen Bereiche), wobei gleichzeitig eine hohe Stabilität gewährleistet ist, insbesondere parallel oder schräg zur Ausrichtung der stegförmigen Bereiche. Da die stegförmige Anordnung der Kontaktierungsschicht dazu führen kann, dass die Aussparungen ebenfalls eine längliche Form aufweisen, kann zudem der Widerstand, den das Kontaktierungselement der Selbstklebemasse beim Hindurchtreten durch die Aussparungen entgegenbringt, verringert und somit das Hindurchtreten der Selbstklebemasse beim Verkleben erleichtert werden.

Eine zusätzliche Verbesserung des Hindurchtretens der Selbstklebemasse beim Verkleben wird erzielt, wenn die stegförmigen Bereiche eine Breite von höchstens 5 mm oder sogar von weniger als 1 mm aufweisen. Hierbei wird die Festigkeit der Verklebung zusätzlich verbessert.

Weiterhin kann es von Vorteil sein, wenn die stegförmigen Bereiche des durchbrochenen Kontaktierungselements in einer verzweigten Kammstruktur oder Fingerstruktur vorliegen. Eine derartige Form ermöglicht eine optimale Nutzung nahezu der gesamten Fläche des Flächenelements zur Wärmeerzeugung bei nur kleinen Aussparungen, ohne dass hierdurch die mechanischen Eigenschaften in nennenswerter Weise beeinträchtigt werden oder ein starker Spannungsabfall über die Schicht zu erwarten ist. Bei einer Kammstruktur wie auch bei einer Fingerstruktur (Interdigitalstruktur) zweigen einzelne Zinken bzw. Finger von einem Hauptstrang ab. Der Hauptstrang kann hierbei einen größeren Querschnitt aufweisen als die Zinken bzw. Finger oder aber denselben Querschnitt. Der Unterschied zwischen einer Kammstruktur und einer Fingerstruktur besteht darin, dass die abzweigenden Elemente bei einer Kammstruktur auf derselben Seite des Hauptstrangs angeordnet sind, während bei einer Fingerstruktur diese auf unterschiedlichen Seiten abzweigen. Beide Strukturen können sowohl einfache als auch mehrfache Verzweigungen und dabei sowohl regelmäßige als auch unregelmäßige Anordnungen aufweisen und lassen sich sowohl bei einer Ausbildung des Kontaktierungselements als eine einzige Elektrode als auch bei einer Ausbildung des Kontaktierungselements als mehrere Elektroden innerhalb der Kontaktierungsschicht einsetzen.

Schließlich stellt die vorliegende Erfindung ein Verfahren zum Verbinden eines derartigen Flächenelements mit zumindest einem Verklebungssubstrat bereit, in dem das Flächenelement zuerst mit dem Verklebungssubstrat derart in Kontakt gebracht wird, dass die zweite Seitenfläche der Kontaktierungsschicht einen Bereich der Oberfläche des Verklebungssubstrats berührt und so einen losen Vorverbund bildet, dann die intrinsisch erwärmbare Selbstklebemasse durch die Aussparungen des Kontaktierungselements hindurchtritt und diese zumindest teilweise ausfüllt, und schließlich die Vorderseite des Flächenelements über die durch die Aussparungen hindurchgetretene intrinsisch erwärmbare Selbstklebemasse an dem Verklebungssubstrat verklebt wird.

Ein derartiges Verklebungsverfahren ist speziell auf das erfindungsgemäße Flächenelement abgestimmt und nutzt dessen Aufbau in besonderer Weise, indem die Selbstklebemasse erst im Verlauf des zweiten Schrittes zu der Vorderseite des Flächenelements hin gelangt und diese Seite des Flächenelements daher erst zum Zeitpunkt des Verklebens klebend wird. Der Einsatz dieses Verfahrens ermöglicht eine besonders einfache Verfahrensführung beim Verkleben und stellt zudem sicher, dass das in der Lagerungsform lediglich einseitig klebende Flächenelement ohne Auftragung einer weiteren Klebemasse beidseitig verklebt werden kann.

Im Verlauf des erfindungsgemäßen Verfahrens tritt die Selbstklebemasse infolge Krafteinwirkung durch die Aussparungen des Kontaktierungselements hindurch und gelangt so an die Vorderseite des Flächenelements. Grundsätzlich können alle geeigneten Kräfte das Hindurchtreten der Selbstklebemasse bewirken, etwa das Hindurchfließen einer viskosen Selbstklebemasse infolge der Schwerkraft, infolge von Grenzflächenkräften oder infolge von Kapillarkräften. Besonders günstig ist es jedoch, wenn der Vorgang dadurch beschleunigt wird, dass der Vorverbund aus Flächenelement und Verklebungssubstrat zum Hindurchtreten der intrinsisch erwärmbaren Selbstklebemasse durch die Aussparungen des Kontaktierungselements zusammengepresst wird, so dass eine in Form eines äußeren Drucks einwirkende Kraft hinzukommt. Anstelle dessen oder zusätzlich dazu kann das Hindurchtreten dadurch verbessert werden, dass die Viskosität der Selbstklebemasse temporär verringert wird; dies lässt sich auf besonders einfache Weise erreichen, wenn der Vorverbund aus Flächenelement und Verklebungssubstrat zum Hindurchtreten der intrinsisch erwärmbaren Selbstklebemasse durch die Aussparungen des Kontaktierungselements erwärmt wird

Die einzelnen vorteilhaften Ausgestaltungen lassen sich, soweit nicht anders angegeben, beliebig untereinander kombinieren, um die zuvor beschriebenen sowie weitere vorteilhafte Wirkungen zu erzielen. Diese Merkmale werden daher auch für sich genommen in Kombination mit den Merkmalen der unabhängigen Ansprüche als schutzfähig erachtet.

Zur Verdeutlichung der Erfindung ist diese im Folgenden allgemein beschrieben, wozu einige repräsentative Beispiele einzelner Bestandteile von Teilaspekten der Erfindung erläutert werden, die in Abhängigkeit von den jeweils gewünschten Eigenschaften nahezu beliebig miteinander verknüpft werden können.

Grundsätzlich betrifft die Erfindung ein Flächenelement mit einer Vorderseite und einer Rückseite. Als Flächenelement im Sinne dieser Anmeldung gelten insbesondere alle üblichen und geeigneten Gebilde mit im Wesentlichen flächenförmiger Ausdehnung. Diese ermöglichen eine flächige Verklebung und können verschieden ausgestaltet sein, insbesondere flexibel, als Klebefolie, Klebeband, Klebeetikett oder als Formstanzling. Die Begriffe Vorderseite und Rückseite beziehen sich auf die beiden Oberflächen des Flächenelements parallel zu seiner Hauptausdehnung und dienen lediglich der Unterscheidung dieser beiden auf gegenüberliegenden Seiten des Flächenelements angeordneten Flächen, ohne dass durch die Wahl der Begriffe die absolute räumliche Anordnung der beiden Flächen festgelegt ist; demzufolge kann die Vorderseite auch die räumlich hinten gelegene Seitenfläche des Flächenelements darstellen, nämlich wenn dementsprechend die Rückseite dessen räumlich vorne gelegene Seitenfläche bildet.

Erfindungsgemäß enthält das Flächenelement zwei unterschiedliche Schichten, eine Heizschicht und eine Kontaktierungsschicht. Als Schicht wird insbesondere eine flächenförmige Anordnung eines Systems einheitlicher Funktionalität bezeichnet, deren Abmessungen in einer Raumrichtung signifikant kleiner ist als in den beiden anderen Raumrichtungen, die die Hauptausdehnung definieren. Eine derartige Schicht kann kompakt oder auch durchbrochen ausgebildet sein und aus einem Material oder aus unterschiedlichen Materialien bestehen, insbesondere, wenn diese zur einheitlichen Funktionalität dieser Schicht beitragen. Eine Schicht kann eine über ihre gesamte Flächenausdehnung konstante Dicke aufweisen oder aber unterschiedliche Dicken. Darüber hinaus kann eine Schicht natürlich auch mehr als eine einzige Funktionalität aufweisen.

Als Heizschicht wird jede Schicht bezeichnet, die zur Erwärmung des Flächenelements eingerichtet ist. Als Kontaktierungsschicht wird jede den elektrischen Strom gut leitende Schicht bezeichnet, mit deren Hilfe eine Spannung an die Heizschicht angelegt und/oder ein Strom durch zumindest durch einen Teilbereich der Heizschicht hindurch geleitet werden kann; die Kontaktierungsschicht dient somit zum Anschluss externer elektrischer Versorgungsleitungen an das Flächenelement (Kontaktierungselektrodenfunktion).

Die Kontaktierungsschicht ist als ein zumindest im Wesentlichen flächenförmig ausgebreitetes und von Aussparungen durchbrochenes Kontaktierungselement ausgebildet. Als Kontaktierungselement wird insbesondere ein Element aus einem den elektrischen Strom leitenden Material bezeichnet, dessen Struktur zumindest in einem Teilbereich den Strom durchgängig elektrisch leitet. "Zumindest im Wesentlichen flächenförmig ausgebreitet" bedeutet, dass die Teilbereiche, aus denen sich die Kontaktierungsschicht zusammensetzt, innerhalb der Schicht in einer flächigen Anordnung vorliegen, wobei einzelne Teilbereiche auch aus dieser flächigen Anordnung herausragen können. Die Kontaktierungsschicht kann einteilig oder mehrteilig ausgebildet sein.

Die Kontaktierungsschicht ist eine elektrisch leitende Verbindung zwischen der Heizschicht und der Stromquelle bzw. Spannungsquelle. Hierbei kann die Kontaktierungsschicht entweder als einer der beiden Elektrodenanschlüsse (Pole) der Heizschicht ausgebildet sein oder aber beide Elektrodenanschlüsse bilden. Stellt die Kontaktierungsschicht lediglich einen der beiden Elektrodenanschlüsse der Heizschicht dar, so ist ein zweiter Elektrodenanschluss erforderlich, damit durch die Heizschicht ein Strom fließen kann und die Heizschicht sich erwärmt. Dieser zweite Elektrodenanschluss kann innerhalb des erfindungsgemäßen Flächenelements ausgebildet sein - etwa in Form einer zusätzlichen zweiten flexiblen Kontaktierungsschicht - oder aber an einem der beiden Verklebungssubstrate vorgesehen sein, beispielsweise als metallische Schicht an der Oberfläche eines Glases (etwa die Silberschicht eines Spiegels).

Die Kontaktierungsschicht weist eine erste Seitenfläche sowie eine zweite Seitenfläche auf. Die erste Seitenfläche der Kontaktierungsschicht und die zweite Seitenfläche der Kontaktierungsschicht sind die beiden Seitenflächen der Kontaktierungsschicht, die parallel zu ihrer Hauptausdehnung angeordnet sind.

Die Kontaktierungsschicht ist nicht vollflächig geschlossen, sondern vielmehr durchbrochen, so dass diese Schicht diskontinuierlich ist und Aussparungen (Vertiefungen) aufweist, die sich auch in einer Richtung senkrecht zur Hauptausdehnung der Schicht erstrecken.

Erfindungswesentlich ist hierbei, dass die Schicht selber nicht vollflächig kompakt ist, sondern dass vielmehr die Aussparungen in dem Kontaktierungselement über die Dicke des Kontaktierungselements hindurch durchgängig ausgebildet sind, sich also durch die Schicht hindurch erstrecken (durchgängige Löcher). Zusätzlich zu diesen durchgängigen Aussparungen kann die Kontaktierungsschicht optional auch weitere Aussparungen aufweisen, die nicht durchgängig sind sondern lediglich auf Teile der Schichtdicke beschränkt sind (Mulden, etwa zur besseren Verankerung oder zur lokalen Verringerung der Dicke der Kontaktierungsschicht).

Die Aussparungen können beliebig geformt sein, etwa regelmäßig oder unregelmäßig, von gleichmäßiger oder wechselnder Breite sein, gerade, schräge oder kurvenförmige Wandabschnitte aufweisen und dergleichen. Die Aussparungen können in der Kontaktierungsschicht in unterschiedliche Richtungen verlaufen oder aber eine besondere Vorzugsrichtung aufweisen, so dass deren Hauptausdehnung zumindest im Wesentlichen in einer Raumrichtung verläuft. Auf die letztgenannte Weise lässt sich eine besonders hohe Flexibilität der Kontaktierungsschicht und somit auch des Flächenelements in einer Richtung bei gleichzeitig minimaler Beeinträchtigung der mechanischen Stabilität und des elektrischen Kontaktquerschnitts erzielen. Dies kann etwa dann besonders sinnvoll sein, wenn das Flächenelement an einer zylindermantelartigen Fläche zu befestigen ist, die in einer Richtung stark gekrümmt ist und dabei einen kleinen Krümmungsradius aufweist.

Als weiteres erfindungsrelevantes Merkmal liegen die Aussparungen zumindest im Bereich der zweiten Seitenfläche im Wesentlichen klebemassefrei vor. Dabei ist die erste Seitenfläche zumindest teilweise in die intrinsisch erwärmbare Selbstklebemasse eingebettet. Dies schließt solche Aussparungen, die lediglich in einem kleinen Teilbereich in der unmittelbaren Umgebung der zweiten Seitenfläche keine Klebemasse aufweisen, ein. Eine im Bereich der zweiten Seitenfläche im Wesentlichen klebemassefreie Aussparung ist eine Aussparung, die im Bereich der zweiten Seitenfläche und somit an der Vorderseite des Flächenelements allenfalls eine geringe Menge Selbstklebemasse enthält, vorzugsweise sogar überhaupt keine Selbstklebemasse. Für den Fall, dass die Aussparung eine geringe Menge Selbstklebemasse enthält, so muss die Menge jedenfalls derart gering sein, dass diese Selbstklebemasse eine allenfalls sehr schwache Klebwirkung an der Vorderseite des Flächenelements zur Folge hat, und dort vorzugsweise nicht aus der Aussparung herausragen.

Die Aussparungen können einen beliebigen Anteil der Flächenausdehnung der Kontaktierungsschicht ausmachen, wobei sich aus praktischen Gründen insbesondere ein Flächenanteil von mindestens 25 % der Fläche der ersten Seitenfläche der Kontaktierungsschicht als günstig herausgestellt hat, bevorzugt mehr als 50 % der Fläche der ersten Seitenfläche der Kontaktierungsschicht oder sogar mehr als 75 % der ersten Seitenfläche der Kontaktierungsschicht.

Das durchbrochene Kontaktierungselement kann im Hinblick auf die konkrete Ausgestaltung der Vertiefungen unterschiedlich gestaltet sein, etwa als unterbrochene Fläche, als aufgefaltete oder verzweigte Drahtstruktur oder dergleichen. Dies beinhaltet auch eine Struktur, in der das Kontaktierungselement stegförmige Bereiche aufweist. Als stegförmig ist jeder Teilbereich des Kontaktierungselements anzusehen, dessen Abmessung in einer Richtung (der Länge des jeweiligen stegförmigen Bereichs) erheblich größer ist als in den anderen beiden Richtungen, wobei im Unterschied zu einer drahtförmigen Struktur zudem dessen Abmessung in einer zweiten Richtung (der Breite des jeweiligen stegförmigen Bereichs) größer ist als dessen Abmessung in der dritten Richtung (der Dicke des jeweiligen stegförmigen Bereichs).

Die Abmessungen der stegförmigen Bereiche kann grundsätzlich beliebig gewählt werden, wobei sich für deren Breite eine Breite von höchstens 5 mm oder sogar von weniger als 1 mm als günstig herausgestellt hat.

Die Randflächen eines derartigen stegförmigen Bereichs können dabei regelmäßig oder unregelmäßig geformt sein. So kann ein stegförmiger Bereich also beispielsweise von einem flachen Quaderabschnitt gebildet werden, von einem Kreisabschnitt, einem Kreisringabschnitt oder auch vollständig unregelmäßig geformt sein.

Aus der stegförmigen Form der Teilbereiche des Kontaktierungselements kann sich ebenfalls eine stegförmige Form der Aussparungen ergeben, jedoch können hierfür auch andere Ausgestaltungen in Frage kommen. Die stegförmigen Bereiche des Kontaktierungselements können überdies in einer übergeordneten Struktur vorliegen, beispielsweise in einer einfach oder mehrfach verzweigten Kammstruktur oder Fingerstruktur.

Demzufolge stellen also auch durchbrochene Metallfolien, Streckmetallgitter, Drahtgitter, Metallnetze oder elektrisch leitende Vliese geeignete Kontaktierungselemente dar. Auch nichtmetallische Leiter wie Metalloxide (beispielsweise Indium-Zinn-Oxid) oder intrinsisch leitfähige Polymere sind erfindungsgemäß einsetzbar, sofern diese entsprechend strukturiert sind. Zur Verbesserung der Flexibilität des Flächenelements hat die Kontaktierungsschicht bevorzugt eine mittlere oder sogar maximale Dicke von weniger als 50 $\mu$m, bevorzugt von weniger als 20 $\mu$m oder sogar von weniger als 10 $\mu$m.

Die den elektrischen Strom leitenden Bereiche des Kontaktierungselements können beliebig ausgebildet sein, etwa miteinander leitend verbunden sein (alle Bereiche oder nur ein Teil der Bereiche) oder jeweils als einzelner Bereich des Kontaktierungselements vorliegen, der nicht mit den anderen Bereichen über das Kontaktierungselement leitend verbunden ist. Gegebenenfalls kann auch ein Teil der Bereiche elektrisch leitend miteinander verbunden sein und ein anderer Teil der Bereiche jeweils einzeln vorliegen. Dies schließt selbstverständlich eine elektrisch leitende Verbindung über die Heizschicht nicht aus.

Weist das durchbrochene Kontaktierungselement zwei oder mehrere Teilbereiche auf, die nicht miteinander über das durchbrochene Kontaktierungselement elektrisch leitend verbunden sind, so ist es möglich, beide elektrischen Kontakte (Elektroden oder Pole), die für eine Heizwirkung der Heizschicht erforderlich sind, innerhalb des Kontaktierungselements zu realisieren, um auf weitere den Strom leitende Schichten außerhalb des Flächenelements verzichten zu können und die Endmontage des Flächenelements an den Verklebungssubstraten zu erleichtern.

Insbesondere kann aber auch vorgesehen sein, dass das Kontaktierungselement zwei nicht miteinander leitend verbundene Bereiche enthält, die als die zwei Elektrodenzuleitungen (Pole) der Heizschicht ausgebildet sind.

Ist das gesamte Kontaktierungselement durchgängig leitend, so wird dieses als einer der beiden Pole der Heizschicht verwendet, wobei ein Stromfluss durch die Heizschicht dann hauptsächlich in einer Richtung senkrecht zur Hauptausdehnung auftritt, wohingegen bei einer Anordnung, bei der das Kontaktierungselement beide Elektrodenanschlüsse darstellt, zusätzlich zu dem senkrechten Stromfluss oder anstelle dessen ein lateraler Stromfluss innerhalb der Hauptausdehnung auftritt.

Darüber hinaus ist es auch möglich, an einzelne Teilabschnitte des Flächenelements jeweils unterschiedliche Spannungen anzulegen, etwa, um einen Spannungsgradienten in der Fläche des Flächenelements zu erzeugen und die Heizleistung individuell den jeweiligen Bedürfnissen anzupassen.

Innerhalb des erfindungsgemäßen Flächenelements ist die Kontaktierungsschicht einseitig an der Heizschicht angeordnet, indem die Kontaktierungsschicht über die erste Seitenfläche mit der Heizschicht in Kontakt steht und mit dieser elektrisch leitend verbunden ist. Die andere Seitenfläche der Kontaktierungsschicht, die zweite Seitenfläche, bildet in dieser Anordnung die Vorderseite des Flächenelements. Aus dieser besonderen Anordnung ergibt sich, dass die Vorderseite des Flächenelements derart ausgebildet ist, dass sie nicht klebrig oder allenfalls nur geringfügig klebrig ist, so dass ein starkes Anhaften des Flächenelements an einer im Lagerungszustand dessen Vorderseite bedeckenden Schutzfolie vermieden wird.

Der direkte Kontakt zwischen der ersten Seitenfläche und der Heizschicht ist derart ausgebildet, dass die erste Seitenfläche der Kontaktierungsschicht zumindest teilweise in die intrinsisch erwärmbare Selbstklebemasse eingebettet **ist**. Als Einbettung wird die Anordnung von Teilbereichen der Kontaktierungsschicht innerhalb der äußeren Begrenzungsebene der Selbstklebemassenschicht verstanden, wobei diese Teilbereiche der Kontaktierungsschicht lokal an mehreren Seiten die Selbstklebemasse berühren. Dies beinhaltet ebenfalls, dass die erste Seitenfläche der Kontaktierungsschicht nur in einem Teilbereich der Kontaktfläche in die intrinsisch erwärmbare Selbstklebemasse eingebettet ist und in den übrigen Bereichen der Kontaktfläche an dieser lediglich anliegt.

Demzufolge steht die Heizschicht mit einer ersten Seitenfläche der Kontaktierungsschicht in Kontakt, so dass sich diese beiden Schichten direkt, das heißt unmittelbar, berühren. Zudem ist die Heizschicht mit der ersten Seitenfläche der Kontaktierungsschicht elektrisch leitend verbunden. Eine Verbindung wird insbesondere dann als elektrisch leitend bezeichnet, wenn der elektrische Gesamtwiderstand der Verbindung, zu dem die Widerstände der zu verbindenden Teilabschnitte und der Kontaktwiderstand der Verbindung beitragen, höchstens von derselben Größenordnung ist wie die Gesamtwiderstände der restlichen leitenden Bereiche und Kontakte. Die zweite Seitenfläche der Kontaktierungsschicht bildet eine der beiden Außenseiten des Flächenelements, nämlich dessen Vorderseite.

Die Heizschicht besteht aus einer intrinsisch erwärmbaren Selbstklebemasse, die als bei Hindurchleiten eines elektrischen Stroms sich erwärmender Leiter ausgebildet ist. Unter Selbstklebemassen werden vorliegend ausnahmslos alle Klebemassen auf der Basis von Haftklebemassen und/oder Heißschmelzklebemassen verstanden, also Klebemassen, die von sich aus eine dauerhafte Verklebung mit dem Substrat (dem Untergrund, Haftgrund oder Klebegrund) erlauben. "Auf der Basis von" oder "auf der Grundlage von" bedeutet vorliegend, dass die klebtechnischen Eigenschaften dieses Klebemassesystems zumindest stark von den grundlegenden Eigenschaften dieser Klebemasse oder dieser Klebemassenbestandteile (dem so genannten Basispolymer) bestimmt werden, wobei selbstverständlich nicht ausgeschlossen ist, dass diese durch Verwendung von modifizierenden Hilfs- oder Zusatzstoffen oder von weiteren polymeren Klebemassen in dem Klebesystem zusätzlich beeinflusst werden.

Als Haftklebemassen werden solche Klebemassen bezeichnet, die bei Raumtemperatur bereits unter relativ schwachem Andruck eine dauerhafte Verklebung mit dem Substrat erlauben. Im Gegensatz dazu werden als Heißschmelzklebemassen solche Klebemassen bezeichnet, die erst bei erhöhten Temperaturen eine dauerhafte Verklebung mit dem Substrat eingehen, wobei die so erhaltene Verklebung auch bei einem anschließenden Abkühlen der Verklebung auf Raumtemperatur noch erhalten bleibt. Die Verklebbarkeit von Haftklebemassen wie auch von Heißschmelzklebemassen beruht auf ihren adhäsiven Eigenschaften.

Als Adhäsion wird üblicherweise der physikalische Effekt bezeichnet, der den Zusammenhalt zweier miteinander in Kontakt gebrachter Phasen an ihrer Grenzfläche aufgrund dort auftretender intermolekularer Wechselwirkungen bewirkt. Die Adhäsion bestimmt somit das Anhaften der Klebemasse an der Substratoberfläche und ist als Anfassklebrigkeit (dem so genannten Tack) und als Klebkraft bestimmbar. Um die Adhäsion einer Klebemasse gezielt zu beeinflussen, werden der Klebemasse häufig Weichmacher und/oder klebkraftsteigernde Harze (so genannte Tackifier) zugesetzt.

Als Kohäsion bezeichnet man üblicherweise den physikalischen Effekt, der den inneren Zusammenhalt eines Stoffs oder Stoffgemisches aufgrund intermolekularer und/oder intramolekularer Wechselwirkungen zur Folge hat. Die Kohäsionskräfte bestimmen somit die Zähflüssigkeit und Fließfähigkeit der Klebemasse, die sich etwa als Viskosität und als Scherstandzeit bestimmen lassen. Um die Kohäsion einer Klebemasse gezielt zu erhöhen, werden diese häufig einer zusätzlichen Vernetzung unterzogen, wofür der Klebemasse reaktive (und somit vernetzbare) Bestandteile oder andere chemische Vernetzer zugesetzt werden und/oder die Klebemasse in einer Nachbehandlung aktinischen (energiereichen) Strahlen ausgesetzt wird.

Die klebtechnischen Eigenschaften einer Haftklebemasse werden in erster Linie von dem Verhältnis adhäsiver und kohäsiver Eigenschaften bestimmt. So ist es beispielsweise für einige Anwendungen wichtig, dass die eingesetzten Klebemassen hochkohäsiv sind, also über einen besonders starken inneren Zusammenhalt verfügen, während für andere Anwendungen eine besonders hohe Adhäsion erforderlich ist.

Die Verwendung von Haftklebemassen ermöglicht ein besonders einfaches Verkleben, ohne dass hierfür weitere Prozessschritte wie etwa ein Erhitzen der Flächenelemente erforderlich ist, so dass solche Selbstklebemassen auch bei einem Haftgrund eingesetzt werden können, der eine stark unregelmäßige Geometrie aufweist oder wärmeempfindlich ist. Bei Verwendung von Heißschmelzklebemassen lässt sich eine besonders hohe Verklebungsfestigkeit erzielen, weshalb diese Systeme insbesondere dort Anwendung finden, wo die Verklebung starken mechanischen Belastungen ausgesetzt ist.

Zusätzlich ist die Selbstklebemasse der Heizschicht intrinsisch erwärmbar ausgebildet. Als intrinsisch erwärmbare Schicht gilt jede Schicht, die von sich aus elektrisch erwärmbar ist, das heißt, dass diese Schicht ohne weitere Bauteile oder Komponenten in der Schicht in der Lage ist, bei Hindurchleiten eines elektrischen Stroms durch die Schicht oder bei Anlegen einer elektrischen Spannung an die Schicht selber Wärme zu produzieren, wobei es unerheblich ist, ob der Strom bzw. die Spannung ein Wechselstrom bzw. eine Wechselspannung ist oder aber ein Gleichstrom bzw. eine Gleichspannung.

Als Heizschicht können grundsätzlich alle Selbstklebemassen verwendet werden, die einen durch diese Selbstklebemasse fließenden elektrischen Strom im Wesentlichen zersetzungsfrei leiten. Bevorzugt wird die Wärme innerhalb der Heizschicht aus dem infolge des elektrischen Widerstands auftretenden Spannungsabfall in dieser Schicht selbst erzeugt, jedoch kann ein Heizen auch auf der Grundlage anderer Effekte erreicht werden, etwa mittels eines anderen elektrothermischen Wandlers oder mittels einer elektrisch initiierten exothermen chemischen Reaktion. Erfindungsgemäß können solche Flächenelemente einmal oder mehrfach einsetzbar ausgebildet sein; ebenfalls kann der Wärmeerzeugungsprozess einmalig oder mehrfach durchführbar sein.

Eine derartige Heizschicht kann senkrecht zur Hauptausdehnung eine (mittlere) Dicke von weniger als 1 mm aufweisen, bevorzugt eine Dicke aus einem Bereich von 10 $\mu$m bis 400 $\mu$m, besonders bevorzugt aus einem Bereich von 20 $\mu$m bis 200 $\mu$m. Eine derartige Ausgestaltung der Heizschicht stellt optimale Eigenschaften sicher, da die Heizschicht einerseits dick genug ist, um eine hinreichend hohe Heizleistung zur Verfügung zu stellen, andererseits dünn genug, um eine schnelle Wärmeleitung innerhalb der Heizschicht sowie gute mechanische Eigenschaften im Hinblick auf Flexibilität und Kohäsion zu gewährleisten. Für den bevorzugten Fall einer als Heizwiderstand eingesetzten Schicht kann diese einen elektrischen Widerstand aufweisen, der einerseits hoch genug ist, um eine Erwärmung der Schicht zu ermöglichen, andererseits niedrig genug ist, um einen Stromfluss durch die Schicht überhaupt zu etablieren.

Diese Heizschicht kann außerdem kaltleitend sein, das heißt hinsichtlich ihres elektrischen Widerstands einen positiven Temperaturkoeffizienten aufweisen und somit einen PTC-Effekt zeigen. Bevorzugt ist die Schicht hinsichtlich ihres positiven Temperaturkoeffizienten und des konkreten Widerstands derart ausgelegt, dass für die jeweilige Betriebsspannung und den jeweiligen Betriebsstrom die Wärmeerzeugung in der Heizschicht durch den PTC-Effekt begrenzt wird, so dass sich die Schicht bezüglich der Wärmeentwicklung selbstregulierend verhält und insbesondere einen festgelegten Temperaturhöchstwert nicht überschreitet. Eine Überhitzung des Flächenelements kann somit vermieden werden.

Bevorzugt wird als Selbstklebemasse eine Haftklebemasse oder Heißschmelzklebemasse eingesetzt, die mindestens einen elektrisch leitfähigen Füllstoff als elektrisch leitfähiges Material umfasst. Als elektrisch leitfähiger Füllstoff wird eine Beimengung zu einer Selbstklebemasse angesehen, die elektrischen Strom entweder bereits für sich alleine (also ohne Selbstklebemasse) leitet oder auch erst in der Mischung mit der Selbstklebemasse.

Als Füllstoff sind grundsätzlich alle geeigneten Füllstoffe einsetzbar, die mit der jeweiligen Selbstklebemasse kompatibel sind. Insbesondere werden hierfür Füllstoffe eingesetzt, die ausgewählt sind aus der Gruppe umfassend Graphit und Ruß, insbesondere Leitruß (beispielsweise Printex™ XE der Fa. Degussa), sowie beliebige Kombinationen davon. Zusätzlich oder stattdessen können bevorzugt auch andere Füllstoffe auf Kohlenstoffbasis eingesetzt werden, insbesondere solche, die nanoskalig sind, also in mindestens einer Raumdimension eine Ausdehnung von nicht mehr als 500 nm, bevorzugt von weniger als 200 nm oder sogar von weniger als 50 nm aufweisen, zum Beispiel Kohlenstoff-Nanoteilchen wie Kohlenstoff-Nanoröhren (beispielsweise Carbon Nanotubes der Fa. Ahwahnee oder Carbon-Nanotube-Masterbatches der Fa. Hyperion Catalysis), Kohlenstoff-Nanofasern (carbon nanofibres), Fullerene und dergleichen.

Vorteilhafterweise wird der Füllstoff in einer solchen Menge eingesetzt, dass der Anteil des Füllstoffs in der Selbstklebemasse groß genug ist, um eine hinreichende Leitfähigkeit der Selbstklebemasse zu gewährleisten, dass diese aber andererseits gering genug ist, um die mechanischen Eigenschaften der Selbstklebemasse nur wenig zu beeinträchtigen. Vorteilhaft kann darüber hinaus auch eine Kombination von verschiedenartigen Füllstoffen sein, da hiermit ausreichende elektrische Leitungseigenschaften - beispielsweise Kaltleiteigenschaften - bei einem möglichst geringen Füllgrad erreicht werden können, insbesondere bei der Kombination von Kohlenstoff-Nanoröhren mit Ruß oder Graphit.

Weiterhin können die Füllstoffe oberflächenmodifiziert eingesetzt werden. Dadurch kann gezielt auf einzelne Eigenschaften der Selbstklebemasse Einfluss genommen werden, etwa, um die Dispergierbarkeit von Kohlenstoff-Nanoröhren oder Ruß in der Selbstklebemasse zu verbessern. Zur Steigerung des PTC-Effekts kann die Oberfläche der leitfähigen Füllstoffe, etwa der Rußpartikel, vollständig oder teilweise mit Metallen wie Nickel, Silber oder Gold, mit Silanen oder mit Formamiden bedeckt werden.

Die Leitfähigkeit und somit auch die erzielbare Temperatur und Aufheizrate ist unter anderem abhängig vom Füllgrad des leitfähigen Füllstoffs, das heißt dessen Massenanteil in der Selbstklebemasse. Durch Anheben des Füllgrades lassen sich höhere Leitfähigkeiten und gegebenenfalls auch höhere Temperaturen erreichen. Somit kann die Ausprägung des Effektes der elektrischen Erwärmbarkeit der Selbstklebemasse durch den Füllgrad bestimmt werden. Der Füllgrad beträgt vorteilhafterweise zwischen 1 und 60 Gew.-%. Sehr bevorzugt werden zwischen 5 und 30 Gew.-% an Füllstoff eingesetzt.

Auf diese Weise lassen sich Selbstklebemassen realisieren, die einerseits eine hinreichend hohe Leitfähigkeit (damit überhaupt ein Strom durch die Selbstklebemasse fließt) und gleichzeitig eine hinreichend niedrige Leitfähigkeit aufweisen (damit eine ausgeprägte Wärmeentwicklung aufgrund des Spannungsabfalls an dem Widerstand auftritt), so dass diese insgesamt als leitende Heizmassen in Frage kommen, andererseits aber über einen hohen Klebstoffanteil verfügen, wodurch die Verklebungsfestigkeit gewährleistet ist. Die elektrische Leitfähigkeit und somit die Erwärmbarkeit der Selbstklebemasse ist ferner auch von deren Basispolymer abhängig.

Um die leitende Selbstklebemasse zu erhalten, können die elektrisch leitfähigen Füllstoffe den Monomeren der Selbstklebemasse vor der Polymerisation und/oder während der Polymerisation beigemischt werden und/oder mit den Polymeren erst nach Beendigung der Polymerisation vermengt werden. Vorzugsweise wird der leitfähige Füllstoff nach der Polymerisation zu einer Schmelze eines Basispolymers der Selbstklebemasse hinzugegeben.

Insbesondere wenn die Selbstklebemasse auf das erfindungsgemäße Flächenelement als Hotmelt-System aus der Schmelze aufgetragen wird, wird der elektrisch leitfähige Füllstoff bevorzugt direkt in die Schmelze eingebracht. Hierbei ist eine homogene Einarbeitung im erfindungsgemäßen Sinne wünschenswert. Homogene Verteilungen des Füllstoffs in der Selbstklebemasse werden bevorzugt durch eine Kompoundierung in Doppelschneckenextrudern, kontinuierlichen Knetern (beispielsweise Buss-Kneter) oder Planetwalzenextrudern erreicht. Ein Vorteil dieses Prozesses ist eine nur kurzzeitige Kontaminierung des Herstellungsprozesses mit dem separaten Füllstoff sowie die Vermeidung von Lösungsmitteln.

Soll die Selbstklebemasse zudem kaltleitend sein, so lassen sich grundsätzlich alle Polymere mit geeigneten klebenden Eigenschaften einsetzen, die einen PTC-Effekt aufweisen, sich also kaltleitend verhalten. Dabei hängt das Auftreten und das Ausmaß eines PTC-Effekts von einer Netzwerkausbildung ab, beispielsweise davon, ob der leitfähige Füllstoff selber agglomeriert vorliegt oder nicht. Der PTC-Effekt lässt sich unter anderem durch während des Herstellprozesses eingebrachte Orientierungen innerhalb der polymeren Bestandteile der Selbstklebemasse unterstützen, etwa, indem eine Anisotropie bezüglich physikalischer Eigenschaften und/oder bezüglich der Ausrichtung der Makromoleküle eingebracht wird.

Als Kaltleiter werden in einem solchen verklebbaren Heizelement in der Regel rußhaltige teilkristalline Thermoplaste wie etwa Polyethylen, Polyvinylidenfluorid, Hexafluorpropylen oder Tetrafluorethylen verwendet. Der Stand der Technik ist in DE 29 48 350 A1, EP 0 307 205 A1, EP 0 512 703 A1 sowie EP 0 852 801 A1 detailliert beschrieben, deren technische Lehre hier ausdrücklich miteinbezogen wird. In einer Verwendung als Spiegelheizung können solche Kaltleiter in Form einer Tinte auf eine durchgängige Leiterfläche aufgebracht, die als elektrische Kontaktierungselektrode dient und die auf einer separaten Trägerfolie einer Stärke von üblicherweise 75 μm bis 250 μm angeordnet sind. Das in der Tinte enthaltene Lösungsmittel wird in einem anschließenden Trocknungsschritt entfernt. Derartige Tinten sind in EP 0 435 923 A1 ausführlich beschrieben.

Wird eine kaltleitende Selbstklebemasse mit einem elektrisch leitfähigen Füllstoff eingesetzt, dann hat es sich als vorteilhaft herausgestellt, mehrphasige Systeme zu verwenden, insbesondere solche, bei denen zumindest eine Phase in dem Temperaturbereich, in dem der PTC-Effekt auftritt, infolge der Erwärmung eine Volumenausdehnung erfährt, die nach derzeit allgemein anerkannter wissenschaftlicher Erklärung zumindest teilweise für das kaltleitende Verhalten verantwortlich ist (siehe J. Meyer in Polymer Engineering and Science, 13 (1973), S. 462 - 468). Als mehrphasig im Sinne der Erfindung werden auch Selbstklebemassen auf der Basis von Polymeren oder Polymermischungen (so genannte Polymerblends) aufgefasst, die zusätzlich zu dem leitfähigen Füllstoff einen oder mehrere weitere Füllstoffe aufweisen.

Als besonders vorteilhaft hat sich der Einsatz von solchen Selbstklebemassen herausgestellt, die teilkristalline Polymere aufweisen. Als teilkristalline Polymersysteme können sowohl einphasige als auch mehrphasige Systeme eingesetzt werden, sowohl Homopolymere als auch Copolymere, insbesondere teilkristalline Blockcopolymere. Die teilkristallinen Polymere können ein Teil des Basispolymers selbst sein oder aber einen Zuschlagstoff darstellen. Die kristallinen Teilbereiche derartiger teilkristalliner Polymere weisen beim Erweichen der Polymermatrix eine stärkere Wärmeausdehnung auf als dessen amorphe Bereiche.

Bevorzugt enthält die Heißschmelzklebemasse und/oder die Haftklebemasse in der Heizschicht mindestens 30 Gew.-% teilkristalliner Polymere, noch besser ist ein Anteil an teilkristallinen Polymeren von mindestens 50 Gew.-% in der Selbstklebemasse. Es wurde gefunden, dass grade bei Heißschmelzklebemassen die Eignung zur Erzielung des PTC-Effekts mit dem Anteil an teilkristallinen Polymeren überraschend stark zunimmt. Haftklebemassen verlieren hingegen mit zunehmendem teilkristallinen Anteil ihre haftklebrigen Eigenschaften, so dass bei Verwendung von Haftklebemassen der Anteil an teilkristallinen Polymeren niedriger zu halten ist als bei Heißschmelzklebemassen, um eine noch hinreichend hohe Haftklebrigkeit zu gewährleisten.

Demzufolge sind Heißschmelzklebemassen für die Ausnutzung des PTC-Effekts über die Erwartungen hinaus gut geeignet. Als im erfinderischen Sinne besonders vorteilhaft haben sich als Selbstklebemassen Heißschmelzklebemassen aus teilkristallinen Polymeren herausgestellt, die zu 100 Gew.-% in dem Basispolymer der Klebemasse enthalten sind oder die zumindest zu nahezu 100 Gew.-% in der Klebemasse enthalten sind.

In einer Heißschmelzklebemasse und/oder Haftklebemasse als Selbstklebemasse sind insbesondere solche teilkristallinen Polymere vorteilhaft, bei denen der Kristallinitätsgrad mehr als 20 % oder sogar mehr als 40 % beträgt. Der Kristallinitätsgrad lässt sich mit Hilfe der dynamischen Differenzkalorimetrie (Differential Scanning Calorimetry; DSC) ermitteln.

So können als Selbstklebemasse im Bereich der teilkristallinen Thermoplaste Polyolefine (beispielsweise Polyethylen niedriger Dichte) oder Copolymere von Polyolefinen (beispielsweise Ethylen-Vinylacetat (EVA), Ethylen-Acrylsäure (EAA), Ethylen-Methacrylsäure (EMAA), Ethylen-Ethylacrylat oder Ethylen-Butylacrylat), Ionomere, Polyamide und/oder deren Copolymere eingesetzt werden. Diese weisen neben einem ausreichend ausgeprägten PTC-Effekt auch besonders vorteilhafte Heißschmelzklebeeigenschaften auf, so dass diese bei einer Selbstklebemasse auf der Basis einer Heißschmelzklebemasse als Basispolymer eingesetzt werden können.

Weiterhin werden im Bereich der teilkristallinen Thermoplaste säuremodifizierte (beispielsweise mit Maleinsäure oder Maleinsäureanhydrid) Polyolefine oder deren Copolymere bevorzugt, da diese besonders gut mit den leitfähigen Füllstoffen wie etwa Ruß oder Kohlenstoff-Nanoröhren verträglich sind und sich bei Verwendung dieser Polymere besonders einfach homogene Dispersionen des Füllstoffs in der Polymermatrix herstellen lassen.

Ganz besonders bevorzugt werden als Blockcopolymere Styrol-Blockcopolymere wie etwa SBS (Styrol-Butadien-Styrol-Blockcopolymere), SIS (Styrol-Isopren-Styrol-Blockcopolymere), SEBS (Styrol-Ethylen-Butylen-Styrol-Blockcopolymere) oder SEPS (Styrol-Ethylen-Propylen-Styrol-Blockcopolymere) eingesetzt.

Vorteilhaft ist auch der Zusatz polymerer oder anorganischer Füllstoffe, die während der Erwärmung mit ihrem Aufschmelzen den PTC-Effekt unterstützen. Dies können beispielsweise hochkristalline Polyolefinwachse oder ionische Flüssigkeiten (niedrigschmelzende Metallsalze) sein. Durch die Wahl des Schmelzpunktes der Füllstoffe kann zudem die Temperatur eingestellt werden, bei der ein kaltleitendes Verhalten (PTC-Effekt) auftritt.

Im Folgenden werden rein exemplarisch weitere typische Beispiele für erfindungsgemäß grundsätzlich einsetzbare Selbstklebemassen gegeben, ohne sich durch diese Aufzählung einzuschränken.

So kommen als Selbstklebemasse der Heizschicht zum einen grundsätzlich alle üblichen und geeigneten Haftklebemassen in Frage. Als Haftklebemassen kommen grundsätzlich alle Haftklebemassensysteme mit geeigneten haftklebenden Eigenschaften in Frage, also haftklebrige Systeme. Die zur Herstellung der Haftklebemassen dienenden Monomere werden insbesondere dermaßen gewählt, dass die resultierenden Polymere bei Raumtemperatur oder höheren Temperaturen als Haftklebemassen eingesetzt werden können.

Haftklebrig im Sinne der vorliegenden Erfindung ist eine Klebemasse, wenn sie entsprechend "Handbook of Pressure Sensitive Adhesive Technology" von Donatas Satas (van Nostrand, New York 1989) haftklebende Eigenschaften besitzt.

Zur Erzielung einer für Haftklebemassen bevorzugten Glasübergangstemperatur $T_G$ der Polymere von $T_G \leq 25$ °C werden die Monomere üblicherweise derart ausgesucht und die mengenmäßige Zusammensetzung der Monomermischung derart gewählt, dass diese sich in Analogie zu der von Fox vorgestellten Gleichung so verhalten (vgl. T.G. Fox, Bull. Am. Phys. Soc. 1 (1956) 123), dass sich der gewünschte Wert für die Glasübergangstemperatur $T_G$ des resultierenden Polymers ergibt nach

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Als Haftklebemassen für die Selbstklebemasse kommen daher beispielsweise Haftklebemassen auf der Basis von Acrylaten und/oder Methacrylaten, Silikonen, Naturkautschuken und/oder Synthesekautschuken in Frage. Derartige Haftklebemassen bieten den Vorteil, dass sich die klebtechnischen Eigenschaften des Flächenelements im breiten Umfang steuern lassen und somit gezielt auf die konkreten Verhältnisse der zu erzielenden Verklebung eingestellt werden können, etwa im Hinblick auf den jeweiligen Haftgrund oder die Umgebungsbedingungen.

So lassen sich also Haftklebemassen auf Basis von Acrylsäure und/oder Methacrylsäure und/oder auf Basis von Estern der vorgenannten Verbindungen einsetzen oder solche auf Basis von hydrierten Natur- oder Synthesekautschuken, da diese besonders alterungsstabil sind und somit wiederholten Heizprozessen des erfindungsgemäßen Flächenelements langzeitig standzuhalten vermögen.

Es sind insbesondere Acrylathaftklebemassen geeignet, die etwa durch radikalische Polymerisation erhältlich sind und die zumindest teilweise auf mindestens einem Acrylmonomer der allgemeinen Formel $CH_2=C(R^1)(COOR^2)$ basieren, wobei $R^1$ gleich H oder ein $CH_3$-Rest ist und $R^2$ gleich H ist oder aus der Gruppe der gesättigten, unverzweigten oder verzweigten, substituierten oder unsubstituierten $C_1$- bis $C_{30}$-Alkylreste gewählt ist. Das mindestens eine Acrylmonomer sollte einen Massenanteil von mindestens 50 Gew.-% in der Haftklebemasse aufweisen.

Es lassen sich nach einer besonders vorteilhaften Ausgestaltung ferner Polymere einsetzen, die

(a1) zumindest teilweise auf mindestens einem Acrylmonomer der allgemeinen Formel $CH_2=C(R^1)(COOR^{2,})$ basieren, wobei $R^1$ gleich H oder ein $CH_3$-Rest ist und $R^{2,}$ aus der Gruppe der gesättigten, unverzweigten oder verzweigten, substituierten oder unsubstituierten $C_2$- bis $C_{20}$-Alkylreste gewählt ist, und

(a2) zumindest teilweise auf einen mit dem mindestens einen Acrylmonomer polymerisierbaren Comonomer basieren, das insbesondere aus Vinylverbindungen mit funktionellen Gruppen, Maleinsäureanhydrid, Styrol, Styrol-Verbindungen, Vinylacetat, Acrylamiden und mit Doppelbindung funktionalisierten Photoinitiatoren gewählt werden kann.

Dabei weist vorzugsweise das mindestens eine Acrylmonomer (a1) einen Massenanteil von 65 Gew.-% bis 100 Gew.-% und das mindestens eine Comonomer (a2) einen Massenanteil von 0 Gew.-% bis 35 Gew.-% in der Selbstklebemasse auf.

Es hat sich ferner eine mittlere molekulare Masse $M_w$ (Gewichtsmittel) der Selbstklebemasse von maximal 800.000 g/mol als vorteilhaft erwiesen, insbesondere im Hinblick auf die gewünschten mechanischen Eigenschaften der Haftklebemasse.

Die Selbstklebemasse kann nach einer weiteren Ausführung auch Natur- oder Synthesekautschukmassen umfassen oder auf solchen basieren. Für Selbstklebemassen aus Naturkautschuk wird der Naturkautschuk bis zu einem frei wählbaren Molekulargewicht abgebaut und währenddessen oder anschließend mit dem elektrisch leitfähigen Füllstoff additiviert.

Als eine besonders haftklebrige Ausführung hierzu können auch teilkristalline Polymere wie EVA (Ethylenvinylacetat) oder Polyolefine sowie deren Copolymere, insbesondere Blockcopolymere, als Selbstklebemasse eingesetzt oder zu dieser hinzugefügt werden. Insbesondere bei einer Verwendung als Haftklebemasse bieten diese Klebemassensysteme infolge der darin auftretenden Volumenvergrößerung der kristallinen Phase beim Überschreiten der Kristallitschmelztemperatur eine zusätzliche Unterstützung des PTC-Effekts.

In bevorzugter Weise werden auch Acryl- oder Methacrylmonomere der allgemeinen Formel $CH_2=C(R^1)(COOR^{2''})$ eingesetzt, die Acryl- und Methacrylsäureester umfassen, wobei die Gruppe $R^{2''}$ aus der Gruppe der gesättigten, unverzweigten oder verzweigten, substituierten oder unsubstituierten $C_1$- bis $C_{14}$-Alkylreste, insbesondere $C_4$- bis $C_9$-Alkylreste, gewählt ist. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigten Isomere, beispielsweise Isobutylacrylat, 2-Ethylhexylacrylat, 2-Ethylhexylmethacrylat, Isooctylacrylat oder Isooctylmethacrylat.

Weitere einsetzbare Verbindungsklassen sind monofunktionelle Acrylate bzw. Methacrylate der allgemeinen Formel $CH_2=C(R^1)(COOR^{2'''})$, wobei der Rest $R^{2'''}$ aus der Gruppe der überbrückten oder nicht überbrückten Cycloalkylreste mit mindestens 6 C-Atomen gewählt ist. Die Cycloalkylreste können auch substituiert sein, beispielsweise durch $C_1$- bis $C_6$-Alkylgruppen, Halogenatome oder Cyanogruppen. Spezifische Beispiele sind Cyclohexylmethacrylat, Isobornylacrylat, Isobornylmethacrylat und 3,5-Dimethyladamantylacrylat.

In einer bevorzugten Vorgehensweise werden Acrylmonomere und/oder Comonomere eingesetzt, die einen oder mehrere Substituenten aufweisen, insbesondere polare Substituenten, beispielsweise Carboxyl-, Sulfonsäure-, Phosphonsäure-, Hydroxyl-, Lactam-, Lacton-, N-substituierte Amid-, N-substituierte Amin-, Carbamat-, Epoxy-, Thiol-, Alkoxy-, Cyan-, Halogenid- und Ethergruppen.

Sehr vorteilhaft im Sinne des Acrylmonomers (a1) eignen sich Monomere, die aus der folgenden Gruppe ausgewählt sind: substituierte oder unsubstituierte Verbindungen umfassend Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, Isobutylacrylat, 2-Ethylhexylacrylat, 2-Ethylhexylmethacrylat, Isooctylacrylat, Isooctylmethacrylat, Cyclohexylmethacrylat, Isobornylacrylat, Isobornylmethacrylat, und 3,5-Dimethyladamantylacrylat.

Geeignet als Comonomere (a2) sind ebenfalls moderat basische Comonomere wie einfach oder zweifach N-alkylsubstituierte Amide, insbesondere Acrylamide. Spezifische Beispiele sind hier N,N-Dimethylacrylamid, N,N-Dimethylmethacrylamid, N-tert-Butylacrylamid, N-Vinylpyrrolidon, N-Vinyllactam, Dimethylaminoethylacrylat, Dimethylaminoethylmethacrylat, Diethylaminoethylacrylat, Diethylaminoethylmethacrylat, N-Methylolacrylamid, N-Methylolmethacrylamid, N-(Butoxymethyl)methacrylamid, N-(Ethoxymethyl)acrylamid, N-Isopropylacrylamid, wobei auch diese Aufzählung nicht abschließend ist.

Weitere bevorzugte Beispiele für Comonomere (a2) sind Hydroxyethylacrylat, Hydroxyethylmethacrylat, Hydroxypropylacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylacrylat, 2-Butoxyethylmethacrylat, Cyanoethylacrylat, Cyanoethylmethacrylat, Glycerylmethacrylat, 6-Hydroxyhexylmethacrylat, Vinylessigsäure, Tetrahydrofurfurylacrylat, beta-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Vorgehensweise werden als Comonomere (a2) Vinylverbindungen, insbesondere Vinylester, Vinylether, Vinylhalogenide, Vinylidenhalogenide, Vinylverbindungen mit aromatischen Cyclen und Heterocyclen in Alphastellung eingesetzt, wobei als nicht ausschließende Beispiele etwa Vinylacetat, Vinylformamid, Vinylpyridin, Ethylvinylether, Vinylchlorid, Vinylidenchlorid, Styrol und Acrylnitril genannt seien.

Besonders vorteilhaft kann das mindestens eine Comonomer (a2) ein Photoinitiator mit einer copolymerisierbaren Doppelbindung sein, insbesondere ausgewählt aus der Gruppe enthaltend Norrish-I-Photoinitiatoren oder Norrish-II-Photoinitiatoren, Benzoinacrylate oder acrylierte Benzophenone.

In einer weiteren bevorzugten Vorgehensweise werden zu den beschriebenen Comonomeren (a2) zusätzliche Monomere hinzugesetzt, die eine hohe statische Glasübergangstemperatur besitzen. Als derartige zusätzliche Monomere eigenen sich aromatische Vinylverbindungen wie etwa Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und 4-Biphenylmethacrylat, 2-Naphthylacrylat und 2-Naphthylmethacrylat sowie Mischungen aus diesen Monomeren, wobei auch diese Aufzählung nicht abschließend ist.

Anstelle von oder zusätzlich zu Haftklebemassen kann das erfindungsgemäße Flächenelement für die Selbstklebemasse auch Heißschmelzklebemassen enthalten. Als Heißschmelzklebemassen kommen grundsätzlich alle Heißschmelzklebemassensysteme mit geeigneten heißschmelzklebenden Eigenschaften in Frage, also heißschmelzklebrige Systeme. Heißschmelzklebrig im Sinne der vorliegenden Erfindung ist ein erfindungsgemäßes Flächenelement, wenn nach der schmelzeförmigen Applikation auf den Haftgrund und anschließendem Abkühlen die Klebkraft bei Raumtemperatur nach ASTM D 3330-04 (bei einer Abzugsgeschwindigkeit von 300 mm/min auf dem zu verklebenden Haftgrund) größer als 1 N/cm ist, insbesondere größer ist als 3 N/cm oder sogar größer als 5 N/cm.

Als Heißschmelzklebemassen können alle üblichen und geeigneten Heißschmelzklebemassen eingesetzt werden, beispielsweise solche auf der Basis von Synthesekautschuken, von thermoplastischen Materialien, von Elastomeren mit Modifikationsharzen, von Acrylsäurederivaten-Vinyl-Copolymeren und von acrylathaltigen Blockcopolymeren.

Aus diesen Klebemassen haben sich insbesondere die aus der Gruppe umfassend Polyolefine und Copolymere von Polyolefinen sowie deren säuremodifizierte Derivate, Ionomere, Polyamide und deren Copolymere sowie Blockcopolymere wie Styrol-Blockcopolymere als vorteilhaft herausgestellt, wobei an erster Stelle auf die vorstehend beschriebenen teilkristallinen Klebemassen verwiesen sei, die natürlich auch für die Selbstklebemasse zum Einsatz kommen können. Mit Hilfe solcher Klebemassensysteme lassen sich die klebtechnischen Eigenschaften des Flächenelements in besonders breitem Umfang bei gleichzeitig hoher Klebkraft steuern und somit gezielt auf die konkreten Verhältnisse der zu erzielenden Verklebung einstellen.

Diese und andere Haftklebemassen und Heißschmelzklebemassen lassen sich zudem modifizieren, um deren Eigenschaften noch weiter anzupassen. So werden typischerweise die für die erfindungsgemäßen Flächenelemente eingesetzten Selbstklebemassen zusätzlich vernetzt, wobei hohe Vernetzungsgrade angestrebt werden, die insbesondere auch den PTC-Effekt verstärken (vergleiche EP 0 311 142 A1 sowie US 4 775 778 A) und daher in besonderem Maß für die Selbstklebemasse geeignet sind. Eine Vernetzung beseitigt oder vermindert auch die Auswirkungen des NTC-Effekts (Negative Temperature Coefficient), der bisweilen bei Temperaturen oberhalb des Schmelzpunkts der Selbstklebemasse beobachtet wird.

Nach einer bevorzugten Ausgestaltung der Erfindung weist ein Basispolymer der Selbstklebemasse bevorzugt einen Vernetzungsgrad auf, der mindestens einem Gelwert von 35 % entspricht, insbesondere von mehr als 60 %. Als Gelwert wird vorliegend das Verhältnis von den Anteilen eines Basispolymers, die in einem geeigneten Lösungsmittel (beispielsweise Toluol oder Xylol) nicht löslich sind, zu der Summe aus löslichen Anteilen und nicht-löslichen Anteilen des Basispolymers verstanden.

Ein hoher Vernetzungsgrad kann etwa in einem Vernetzungsschritt mit Elektronenstrahlen erhalten werden. Typische Bestrahlungsvorrichtungen, die zum Einsatz kommen können, sind Linearkathodensysteme, Abtastsysteme (Scannersysteme) oder Segmentkathodensysteme, sofern es sich hierbei um Elektronenstrahlbeschleuniger handelt. Eine ausführliche Beschreibung des Standes der Technik und die wichtigsten Verfahrensparameter findet man bei Skelhorne, "Electron Beam Processing, in Chemistry and Technology of UV and EB Formulation for Coatings, Inks and Paints", Vol. 1, 1991, SITA, London. Typische Beschleunigungsspannungen liegen im Bereich zwischen 50 kV und 500 kV, vorzugsweise im Bereich zwischen 80 kV und 300 kV. Die angewandten Streudosen bewegen sich zwischen 5 kGy bis 150 kGy, insbesondere zwischen 20 kGy und 100 kGy. Es können auch andere Verfahren eingesetzt werden, die eine hochenergetische Bestrahlung ermöglichen.

Weiterhin kann erfindungsgemäß eine Variation der elektrischen Leitfähigkeit und somit der thermischen Erwärmung über den Vernetzungsgrad bewirkt werden. Durch Erhöhen der bei einer Vernetzungsreaktion einwirkenden Elektronenstrahldosis (und damit einhergehend einer Erhöhung des Vernetzungsgrades) lässt sich die elektrische Leitfähigkeit erhöhen, so dass bei einem konstanten Stromfluss durch die Heizschicht des Flächenelements die erzielbare Temperatur der Selbstklebemasse ansteigt. Ebenso lässt sich über den Vernetzungsgrad das kaltleitende Verhalten der Selbstklebemasse steuern.

Zur Verringerung der für eine Vernetzungsreaktion erforderlichen Strahlendosis können der Selbstklebemasse zusätzlich Vernetzer und/oder Promotoren zur Vernetzung beigemischt werden, insbesondere solche, die mittels Elektronenstrahlen oder thermisch anregbar sind. Geeignete Vernetzer für die Elektronenstrahlvernetzung sind etwa bifunktionelle oder multifunktionelle Acrylate oder Methacrylate oder Triallylcyanurate sowie Triallylisocyanurate. Als thermisch aktivierbare Vernetzer werden bevorzugt bifunktionelle oder multifunktionelle Epoxide, Hydroxide, Isocyanate oder Silane beigemischt.

Eine Selbstklebemasse kann selbstverständlich weitere Rezeptierungsbestandteile und/oder Zuschlagsstoffe umfassen wie zum Beispiel Hilfsstoffe, Pigmente, rheologische Additive, Additive zur Verbesserung der Haftung, Weichmacher (Plastifizierungsmittel), Harze, Elastomere, Alterungsschutzmittel (Antioxidantien), Lichtschutzmittel, UV-Absorber sowie sonstige Hilfs- und Zusatzstoffe, beispielsweise Trockenmittel (etwa Molekularsieb-Zeolithe oder Calciumoxid), Fließ- und Verlaufmittel, Benetzer wie Tenside oder Katalysatoren sowie wärmeleitende Füllstoffe, Wärme speichernde Füllstoffe oder Zuschlagsstoffe, die durch Wärme freigesetzt werden oder deren Freisetzung durch Wärme unterstützt wird.

Als Hilfsstoffe können alle fein gemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Natürlich können auch Mischungen der genannten Stoffe eingesetzt werden.

Die eingesetzten Pigmente können organischer oder anorganischer Natur sein. Es kommen alle Arten organischer oder anorganischer Farbpigmente in Frage, beispielsweise Weißpigmente wie Titandioxid zur Verbesserung der Licht- und UV-Stabilität oder Metallpigmente.

Beispiele für rheologische Additive sind pyrogene Kieselsäuren, Schichtsilikate (beispielsweise Bentonite), hochmolekulare Polyamidpulver oder Pulver auf der Basis von Rhizinusölderivaten.

Additive zur Verbesserung der Haftung können zum Beispiel Stoffe aus den Gruppen der Polyamide, Epoxide oder Silane sein.

Beispiele für Weichmacher zur Verbesserung der Klebfähigkeit sind Phthalsäureester, Trimellitsäureester, Phosphorsäureester, Adipinsäureester sowie Ester anderer acyclischer Dicarbonsäuren, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitrilkautschuke oder Polyisoprenkautschuke), flüssige oder halbfeste Polymerisate aus Buten und/oder Isobuten, Acrylsäureester, Polyvinylether, Flüssig- und Weichharze auf Basis der Rohstoffe, die auch die Basis für klebrigmachende Harze darstellen, Wollwachs und andere Wachse, Silikone sowie Polymerweichmacher wie etwa Polyester oder Polyurethane.

Zuschlagsstoffe, die durch Wärme freigesetzt werden oder deren Freisetzung durch Wärme unterstützt wird, sind solche Systeme, die einen aktiven Stoff enthalten, der infolge der Einwirkung von Wärme freigesetzt oder aktiviert wird, so dass eine kontrollierte Abgabe dieses aktiven Stoffs möglich ist. Als aktiver Stoff kommt jeder Stoff in Frage, der bei der thermischen Freisetzung oder Aktivierung eine besondere Wirkung entfaltet, beispielsweise ein Farbstoff, ein medizinischer oder kosmetischer Wirkstoff oder ein Sprengzünder (Initialsprengstoff). Die Wirkung kann etwa infolge der Freisetzung des Stoffs (zum Beispiel bei einem topisch anwendbaren Wirkstoff) oder bei einer thermischen Aktivierung eintreten, etwa einer thermisch initiierten chemischen Reaktion (beispielsweise einer molekularen Umlagerung, einer Vernetzungsreaktion oder einer Zersetzung) oder einem thermisch initiierten physikalischen Vorgang (beispielsweise einer Adsorption/Desorption oder einem Phasenübergang). So kann es sich bei dem durch Wärme freisetzbaren Zuschlagstoff etwa um einen in einer schmelzbaren Matrix verkapselten topisch anwendbaren medizinischen Wirkstoff handeln.

Die Rezeptierung der Klebemasse mit weiteren Bestandteilen wie zum Beispiel Hilfsstoffen und Weichmachern ist ebenfalls Stand der Technik.

Zur Optimierung der klebtechnischen Eigenschaften können den erfindungsgemäßen Selbstklebemassen Harze beigemischt werden. Als zuzusetzende klebrigmachende Harze (die Klebkraft steigende Harze) sind ausnahmslos alle vorbekannten und in der Literatur beschriebenen Klebharze einsetzbar. Genannt seien stellvertretend die Pinenharze, Indenharze und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$- bis $C_9$- sowie andere Kohlenwasserstoffharze. Beliebige Kombinationen dieser und weiterer Harze können eingesetzt werden, um die Eigenschaften der resultierenden Klebemasse wunschgemäß einzustellen. Im Allgemeinen lassen sich alle mit dem entsprechenden Basispolymer kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. In einer bevorzugten Auslegung werden Harze eingesetzt, die die elektrische Leitfähigkeit und die Erwärmbarkeit nicht vermindern, auch nicht über einen längeren Zeitraum.

Eine weitere vorteilhafte Ausgestaltung des Flächenelements kann durch Zugabe von einem Wärme speichernden Füllstoff zu zumindest einer der Schichten erreicht werden. Als Wärme speichernder Füllstoff wird vorliegend jeder Füllstoff mit einer hohen Wärmekapazität verstanden, insbesondere mit einer Wärmekapazität von mehr als 0,7 J/gK. Infolge der thermischen Pufferwirkung dieser Substanzen kann so ein gleichmäßiger Verlauf beim Aufheizen sowie eine verlängerte und gleichmäßige Wärmeabgabe nach Beendigung des aktiven Wärmeerzeugungsprozesses erzielt werden. Füllstoffe mit hoher Wärmekapazität, die vorteilhaft eingesetzt werden können, sind etwa Aluminium, Beryllium, Bor, Calcium, Eisen, Graphit, Kalium, Kupfer, Magnesium, Phosphor oder Verbindungen der vorgenannten Stoffe, insbesondere Aluminiumoxid und Aluminiumchlorid, Calciumcarbonat, Calciumchlorid, Kupfersulfat, Magnetit, Haematit, Magnesiumcarbonat und Magnesiumchlorid, Phosphorchlorid oder Phosphoroxid (wobei diese Stoffe darüber hinaus auch weitere Funktionen innerhalb des Flächenelements erfüllen können, etwa Kalium oder Phosphor bei Sprengzündern).

Vorteilhaft ist es auch, wenn zumindest die Selbstklebemasseschicht eine hohe Wärmeleitfähigkeit aufweist, insbesondere von mindestens 0,5 W/m•K, ganz besonders bevorzugt von mehr als 1 W/m•K. Dies kann etwa durch Zugabe von wärmeleitenden Füllstoffen erreicht werden, insbesondere von elektrisch isolierenden aber hoch wärmeleitenden Füllstoffen wie etwa Bornitrid oder Aluminiumoxid, da durch letztere die elektrischen Eigenschaften nicht beeinflusst werden. Jedoch sind auch elektrisch leitfähige Füllstoffe mit hoher Wärmeleitfähigkeit einsetzbar, beispielsweise Silber, Aluminium oder Kupfer. Durch besonders wärmeleitfähige Haftklebemassen kann die zum Aufschmelzen einer Heißschmelzklebemasse erforderliche Energie besser eingebracht werden, was etwa zu verkürzten Zykluszeiten beim Aufbringen des erfindungsgemäßen Flächenelements auf das Verklebungssubstrat führt.

Zusätzlich zu der Heizschicht und der Kontaktierungsschicht kann das erfindungsgemäße Flächenelement weitere Schichten aufweisen. So ist es etwa möglich, dass das Flächenelement weitere Klebemassenschichten enthält, etwa, indem an der von dem durchbrochenen Kontaktierungselement abgewandten Seitenfläche der Heizschicht eine weitere Selbstklebemasse vorgesehen ist. Auch diese Klebemasse kann jede geeignete Haftklebemasse oder Heißschmelzklebemasse sein, beispielsweise eine Selbstklebemasse mit einer der zuvor beschriebenen Basisklebemassen. Hierdurch können die klebtechnischen Eigenschaften der beiden Seitenflächen des Flächenelements voneinander entkoppelt werden, so dass es möglich ist, eine besonders hohe Verklebungsstabilität insgesamt zu erreichen, da die Klebemassen an den selbstklebenden Seitenflächen des Flächenelements individuell auf den jeweiligen Klebegrund eingestellt werden können, was insbesondere dann von Bedeutung ist, wenn die Materialien des mit der Vorderseite des Flächenelements zu verbindenden Klebegrunds und des mit der Rückseite des Flächenelements zu verbindenden Klebegrunds stark unterschiedlich sind, etwa im Falle eines glasartigen oder metallischen Kontaktierungselements und eines polyolefinischen Klebegrunds.

In einer weiteren vorteilhaften Ausführung ist zumindest eine Schicht des erwärmbaren Flächenelements mit einem Mechanismus ausgestattet, der bei erstmaliger Erwärmung des Flächenelements zu einer Kohäsionserhöhung in der Selbstklebemasse, der Selbstklebemasse und/oder gegebenenfalls in einer weiteren Selbstklebemasse führt. Dies kann beispielsweise über eine Erhöhung der Vernetzungsdichte durch eine thermisch initiierte Nachvernetzung erreicht werden, die insbesondere durch die (intrinsische) Erwärmung des Flächenelements selbst initiiert werden kann. Vorteilhafterweise wird ein solches Flächenelement daher derart verwendet, dass zunächst die Verklebung mit mindestens einem Verklebungssubstrat hergestellt wird und anschließend die erstmalige Erwärmung vorgenommen wird, während derer sich eine Verfestigung der Verklebung einstellt.

Üblicherweise ist das Flächenelement trägerfrei ausgebildet, da hierdurch eine maximale Flexibilität des Flächenelements insgesamt bei gleichzeitig minimaler Einbautiefe gewährleistet ist. Für eine besonders hohe mechanische Stabilität kann in dem Flächenelement aber auch ein flexibler permanenter Träger vorgesehen sein. Dieser Träger kann etwa eingesetzt werden, um die mechanischen Eigenschaften wie beispielsweise die Durchstoßfestigkeit des Flächenelements insgesamt zu verbessern. Als derartige permanente Träger können alle geeigneten Trägermaterialien verwendet werden, etwa Folien aus Metall und/oder Kunststoffen, textile Flächenelemente (beispielsweise Gewebe, Gelege, Gewirke, Vliese) oder Kombinationen aus solchen Materialien. Auch diese permanenten Träger können vollflächig geschlossen oder durchbrochen ausgebildet sein. Ist ein derartiger permanenter Träger vorgesehen, so ist es erfindungsgemäß allerdings zwingend, dass dieser nicht in direktem Kontakt mit dem Kontaktierungselement steht, sondern allenfalls an der Selbstklebemassenschicht angeordnet ist.

Vorteilhaft ist es, wenn auch der permanente Träger zusätzlich zu seiner hohen Flexibilität eine hohe Wärmeleitfähigkeit aufweist, insbesondere eine Wärmeleitfähigkeit von mindestens 0,5 W/m•K oder sogar von mehr als 1 W/m•K. Besonders bevorzugte Materialien sind mit wärmeleitfähigen Füllstoffen wie etwa Bornitrid oder Aluminiumoxid gefüllte Polymere. Derartige permanente Träger weisen typischerweise eine Stärke von weniger als 50 μm auf, bevorzugt von weniger als 25 μm, um die Flexibilität des Aufbaus insgesamt nicht zu beeinträchtigen. Durch besonders wärmeleitfähige Träger kann die zum Aufschmelzen einer Heißschmelzklebemasse erforderliche Energie besser eingebracht werden, was etwa zu verkürzten Zykluszeiten beim Aufbringen des erfindungsgemäßen Flächenelements auf das Verklebungssubstrat führt. In einer besonders vorteilhaften Ausführung ist der permanente Träger als polymerer Schaum ausgebildet, da hierdurch die Flexibilität des gesamten Flächenelements nicht wesentlich beeinträchtigt wird.

Ferner kann das Flächenelement an seiner Vorderseite und/oder an seiner Rückseite einen temporären Träger als Schutzfolie aufweisen, um die Handhabbarkeit des Flächenelements vor dem Verkleben und während des Verklebens zu verbessern. Hierdurch kann während der Herstellung, Lagerung und Verklebung ein unbeabsichtigtes Verkleben vermieden werden, so dass diese Schritte somit einfacher durchgeführt werden können. Als derartiger temporärer Träger kann jedes trennende Abdeckmaterial verwendet werden, etwa ein Trennpapier oder ein Prozessliner, der eine der äußeren Selbstklebemassen zumindest teilweise bedeckt. Als Abdeckmaterial eignen sich beispielsweise alle silikonisierten oder fluorierten Folien mit einer Releasewirkung, die rückstandsfrei wiederablösbar sind. Als Folienmaterialien seien hier nur beispielhaft PP (Polypropylen), BOPP (biaxial orientiertes Polypropylen), MOPP (monoaxial orientiertes Polypropylen), PET (Polyethylenterephthalat), PVC (Polyvinylchlorid), PUR (Polyurethan), PE (Polyethylen), PE/EVA (Polyethylen-Ethylenvinylacetat-Copolymere) und EPDM (Ethen-Propylen-Dien-Terpolymere) genannt. Weiterhin lassen sich auch Trennpapiere einsetzen, zum Beispiel Glassine-Papiere, Kraft-Papiere oder polyolefinisch beschichtete Papiere.

Besonders vorteilhaft werden Abdeckmaterialien eingesetzt, die selbst eine hohe Wärmeleitfähigkeit aufweisen, insbesondere von mindestens 0,5 W/m•K oder sogar von mehr als 1 W/m•K. Besonders bevorzugte Materialien sind mit wärmeleitfähigen Füllstoffen, wie etwa Bornitrid oder Aluminiumoxid gefüllte Polymere. Durch besonders wärmeleitfähige Abdeckmaterialien kann die zum Aufschmelzen einer Heißschmelzklebemasse erforderliche Energie besser eingebracht werden, was etwa zu verkürzten Zykluszeiten beim Aufbringen des erfindungsgemäßen Flächenelements auf das Verklebungssubstrat führt.

Das Flächenelement umfasst also mindestens eine Schicht, innerhalb derer Wärme erzeugt werden kann, wobei diese Schicht haftklebrig oder heißschmelzklebrig ist, und eine diskontinuierliche elektrisch leitfähige Schicht, die zumindest eine Elektrode (einen Pol) der Kontaktierungsschicht darstellt. Wichtig ist hierbei, dass das Kontaktierungselement lediglich an einer seiner Seitenflächen eine Selbstklebemasse aufweist. Im einfachsten Fall ist das Flächenelement demzufolge eine entsprechende Klebemassenschichtung mit einer daran angeordneten Kontaktierungsschicht.

Zur Herstellung der erfindungsgemäßen Flächenelemente sind ohne Ausnahme alle bekannten und geeigneten Verfahren einsetzbar. So lassen sich die polymeren Haftklebeschichten oder Heißschmelzklebeschichten des erfindungsgemäßen Flächenelements mit den geläufigen Verfahren zur Herstellung polymerer Flächenelemente nach dem Stand der Technik herstellen. Dazu zählen etwa die Flachfolienextrusion, die Blasfolienextrusion, das Kalanderverfahren, die Beschichtung aus einer Lösung, aus einer Dispersion oder aus einer monomeren oder einer präpolymeren Vorstufe des Polymeren.

Zur Herstellung der Flächenelemente wird üblicherweise die Selbstklebemasse zunächst schichtförmig ausgebreitet, etwa auf einem permanenten Träger oder temporären Träger, beispielsweise einem Abdeckmaterial oder einem Fertigungsträger - einem so genannten Prozessliner -, der während des Verfahrens oder spätestens am Ende des Verfahrens von dem Flächenelement wieder getrennt wird. Auf diese Selbstklebemassenschicht wird das Kontaktierungselement aufgebracht.

Natürlich ist es auch möglich, das erfindungsgemäße Flächenelement in einem hiervon abweichenden beliebigen anderen Herstellungsverfahren zu erhalten, beispielsweise, indem das Kontaktierungselement zuerst auf einen temporären Träger aufgetragen wird, anschließend mit der Selbstklebemasse verbunden wird, und dann der temporäre Träger von dem Kontaktierungselement abgezogen wird.

Zum Auftragen des Kontaktierungselements auf die Selbstklebemasse oder gegebenenfalls den temporären Träger können alle bekannten Verfahren eingesetzt werden, etwa das Aufbringen (beispielsweise Drucken) von Leitlacken, Leitpasten oder Leittinten, der Transfer von Blechen, Folien oder Schichten (beispielsweise solchen aus Metallen) mittels Heißprägen, Heißsiegeln, Aufkaschieren oder Auflaminieren oder das diskontinuierliche Aufbringen von Mischungen aus Polymeren und leitfähigen Füllstoffen (beispielsweise Polymer-Ruß-Compounds), wobei in letzterem Fall das Kontaktierungselement eine Leitfähigkeit aufweisen muss, die mindestens um den Faktor 10 höher ist als die Leitfähigkeit der intrinsisch erwärmbaren Selbstklebemasse.

In einer einfachen Ausgestaltung eines solchen Verfahrens wird die erwärmbare Selbstklebemasse mit einem elektrisch leitfähigen Metallgitter oder Metallnetz kontaktiert. In bevorzugter Weise werden Metalle eingesetzt, die über einen längeren Zeitraum nicht oder nur wenig korrodieren. In sehr bevorzugten Ausführungen wird beispielsweise Kupfer oder Aluminium eingesetzt, wobei aber auch Silber- oder Gold-Kontaktierungen vorgenommen werden können.

In einer bevorzugten Ausführungsform kann das Metall direkt auf der Selbstklebemasse abgeschieden werden, etwa durch galvanische oder Bedampfungsverfahren oder durch Laserverfahren, es kann aber auch in Form einer kontinuierlichen oder durchbrochenen Schicht aufkaschiert werden, indem es von einem Prozessliner transferiert wird.

Bei der Verwendung von Leitlack, einer leitfähigen Tinte, einer leitfähigen Druckfarbe, einem intrinsisch leitfähigen Polymer oder einer Polymer-Leitstoff-Mischung werden Druckverfahren bevorzugt, insbesondere etwa ein Siebdruck, da die diskontinuierlichen Kontaktierungsschichten hiermit besonders leicht, variabel und reproduzierbar aufgebracht werden können. Der Druck kann aus einer Lösung, aus einer Dispersion oder aus einer Schmelze erfolgen; gegebenenfalls kann hierbei ein nachträglicher Aushärtungsschritt vorgesehen sein.

Bei der Herstellung des erfindungsgemäßen Flächenelements kann es insbesondere vorteilhaft sein, dieses nach einem Verfahren durchzuführen, bei dem aus der Selbstklebemasse zunächst eine Klebeschichtung erzeugt wird (etwa, indem die Klebemasse auf einen temporären Träger aufgetragen wird) und bei dem dann auf die Vorderseite der so erhaltenen Schichtung das durchbrochene Kontaktierungselement direkt aufgebracht wird, wobei dies gegebenenfalls unter Andruck erfolgen kann.

Die Flächenelemente werden erfindungsgemäß zum Verbinden zweier Verklebungssubstrate miteinander oder auch zum Verbinden zweier unterschiedlicher Teilbereiche eines einzigen Verklebungssubstrats eingesetzt. Da das Flächenelement zwar in der Lagerungsform lediglich einseitig selbstklebend ausgerüstet ist, aber beim Verkleben beidseitig verklebbar ausgebildet wird, ist es dafür angepasst, die Oberflächen zweier Verklebungssubstrate miteinander klebend zu verbinden. Insbesondere findet das Flächenelement zur Verklebung von Verklebungssubstraten in der Fahrzeugindustrie Verwendung und wird etwa in Automobilen, Bussen, Eisenbahnen, Schiffen oder Flugzeugen eingesetzt.

Das erfindungsgemäße Flächenelement kann hierbei als Bestandteil eines Verklebungsverbunds vorliegen. Ein Verklebungsverbund ist vorliegend jeglicher mittels Verklebung erhaltener Verbund aus einem Flächenelement und mindestens einem Verklebungssubstrat, das mit einer selbstklebenden Seitenfläche des Flächenelements direkt oder über weitere Bestandteile verbunden ist. Vorteilhafterweise wird als Verklebungssubstrat eine Spiegelscheibe eingesetzt, insbesondere die Rückseite der verspiegelten Seite einer Spiegelscheibe, oder- im Falle eines transparenten Flächenelements - eine Sichtscheibe, beispielsweise ein Displayfenster oder eine Windschutzscheibe. Bei derartigen Systemen ist infolge des hohen Eigengewichts des Verklebungssubstrats ein Ablösen des Verklebungssubstrats aus der Halterung und die daraus potentiell resultierende Zerstörung des Verklebungssubstrats besonders problematisch, so dass hier eine besonders hohe Verklebungsfestigkeit gewährleistet sein muss. Demzufolge kann das erfindungsgemäße Flächenelement zum Beheizen eines derartigen Verklebungsverbunds eingesetzt werden.

So kann das erfindungsgemäße Flächenelement etwa als Spiegelheizung (Außen- und Innenspiegel), in einer heizbaren Innenverkleidung (Befestigung, Geräuschdämmung, Heizung), zur Wischwasserbeheizung oder Einfriersicherung, für eine Tankbeheizung (insbesondere für Dieselfahrzeuge), für die Beheizung von Kraftstoffleitungen (gleichzeitig als Befestigung), in einer Heizung für Enteisungssysteme (Tragflächenenteisung, gegebenenfalls einschließlich Befestigungsfunktionen), in einer Lenkradheizung, zur Heizungslufterwärmung (Zusatzheizung bei kaltem Motor) oder zur Ansaugluftvorwärmung (Verbrennungsluft) eingesetzt werden. Diese Aufzählung ist rein exemplarisch und die Anwendung des erfindungsgemäßen Flächenelements nicht auf diese konkreten Beispiele beschränkt.

Darüber hinaus lassen sich eine Vielzahl weiterer Anwendungen finden, zum Beispiel (ohne sich durch diese Auswahl einzuschränken) zum Vermeiden von Kondenswasser oder von Niederschlag auf Flächen (beispielsweise bei Badezimmerspiegeln, zur Befestigung und Heizung, als Antibeschlag-Kaschierung etwa für Badezimmeranwendungen, als beheizbare Fliesenklebefolie, an Korrektur- oder Sonnenbrillen oder in Brillenetuis), als Sitzheizung (beispielsweise in Automobilen, einschließlich einer integrierten Anwendung von Sitzheizung und Sitzbelegungssensor für Airbags), für Sitzgelegenheiten an Bushaltestellen, in Sportstadien, bei der Gastronomie im Außenbereich oder für Toilettensitze, in Heizdecken oder Heizmatten, in Warmhalteplatten (etwa solche für Lebensmittel und Speisen, aber auch in Hochgebirgskochern oder Hochgebirgsherden, insbesondere unter Verwendung von Solarzellen), in Schuhwärmern (etwa als Einlegesohle), in Bandheizungen (etwa für Rohrleitungen, Kessel und dergleichen), zur Raumbeheizung (beispielsweise in Wandheizungen, Fußbodenheizungen oder auch als faltbare Zeltheizung), in Wasserbettheizungen, in heizbaren Gehäusen (beispielsweise als so genannte Thermobox zur Temperierung des Gehäuseinhalts oder im Elektronikbereich, etwa um im Zusammenspiel mit einem Peltier-Element in HiFi-Anlagen eine konstante Temperatur zur gewährleisten), für Motorräder (beispielsweise als Lenkerheizung oder Sattelheizung), als Gewächshausheizung (beispielsweise als großflächige Strahlungsheizung oder Konvektionsheizung oder als kleinflächige lokale Heizung direkt an den Pflanzen, etwa als Wurzelheizung), für funktionell beheizbare Bekleidung (beispielsweise in Motorradfahrerbekleidung, Autofahrerbekleidung oder Winterbekleidung), zum Beheizen und gegebenenfalls Befestigen von Anzeigesystemen (beispielsweise von LCDs, OLEDs und elektrophoretischen Displays, etwa als Einfrierschutz für Displays in Kameras oder Außenbereichsanzeigen, oder in Kirchturmuhren, etwa zum Enteisen derselben), zum Beheizen von beheizten Außenschaltern, zur Dacherwärmung (beispielsweise als Abtauanlage für Dachflächen oder Dachrinnen), in Brutkästen (beispielsweise für Jungtiere, zum Ausbrüten von Eiern oder in Inkubatoren für menschliche Babies), in der medizinischen Therapie (beispielsweise auf der Oberfläche eines menschlichen oder tierischen Körpers in der Wärmetherapie, als Wärmepflaster sowie für transdermale therapeutische Systeme und für transdermale Medikamentierung (so genanntes transdermal drug delivery), bei der ein verkapselter Wirkstoff, der durch Wärme freisetzbar ist oder dessen Freisetzung durch Wärme unterstützt wird, an der Hautoberfläche oder Felloberfläche freigesetzt wird, wodurch eine zeitlich und mengenmäßig kontrollierte Freisetzung der entsprechenden aktiven Stoffe erreicht wird) oder als Sprengzünder.

Um das erfindungsgemäße Flächenelement mit zwei Verklebungssubstraten zu verbinden, können alle beliebigen Verklebungsverfahren durchgeführt werden. Infolge der besonderen Ausbildung des Flächenelements ist es jedoch erforderlich, dass das Flächenelement zuerst an seiner Rückseite mit einem ersten Verklebungssubstrat verbunden oder zumindest in Kontakt gebracht wird, bevor die Vorderseite mit einem zweiten Verklebungssubstrat verbunden werden kann, da die Selbstklebemasse erst danach an die Vorderseite des Flächenelements gelangt. Dies schließt selbstverständlich nicht aus, dass zunächst beide Verklebungssubstrate mit dem Flächenelement in Kontakt gebracht werden, bevor eine Verklebung bewirkt wird, da ein Verkleben der Vorderseite auch bei dieser vereinfachten Verfahrensführung infolge der Struktur des erfindungsgemäßen Flächenelements erst nach dem Verbinden der Rückseite mit dem ersten Verklebungssubstrat erfolgt.

Somit enthält das Verfahren des Verbindens des Flächenelements mit dem zweiten Verklebungssubstrat also mindestens die folgenden Schritte: das Flächenelement wird mit dem (zweiten) Verklebungssubstrat derart in Kontakt gebracht, dass die zweite Seitenfläche der Kontaktierungsschicht einen Bereich der Oberfläche des Verklebungssubstrats berührt und so einen losen Vorverbund bildet, die intrinsisch erwärmbare Selbstklebemasse tritt durch die Aussparungen des Kontaktierungselements hindurch und füllt diese zumindest teilweise aus, und die Vorderseite des Flächenelements wird über die durch die Aussparungen hindurchgetretene intrinsisch erwärmbare Selbstklebemasse an dem zweiten Verklebungssubstrat verklebt.

Bei dem ersten In-Kontakt-Bringen des Flächenelements und des zweiten Verklebungssubstrats berührt die zweite Seitenfläche der Kontaktierungsschicht einen Bereich der Oberfläche des Verklebungssubstrats, ohne dass diese eine stabile klebende Verbindung miteinander eingehen. Dies schließt allerdings nicht aus, dass ein Vorfixieren stattfinden kann, bei dem das Flächenelement und das zweite Verklebungssubstrat wieder lösbar aneinander anhaften. Hierbei wird aus dem Flächenelement und dem zweiten Verklebungssubstrat ein nicht fester und somit loser Vorverbund, also ein Verbund vor dem eigentlichen Verbinden.

Nun tritt die intrinsisch erwärmbare Selbstklebemasse durch die Aussparungen des Kontaktierungselements hindurch, es wird also ein Hindurchtreten der intrinsisch erwärmbaren Selbstklebemasse durch die Aussparungen des Kontaktierungselements bewirkt. Das Hindurchtreten kann beliebig erzielt werden. Üblicherweise kann dies geschehen, indem das erste Verklebungssubstrat an die Rückseite des Flächenelements herangeführt wird und mit dieser verklebt wird. Das erste Verklebungssubstrat kann entweder zeitlich vor dem zweiten Verklebungssubstrat mit dem Flächenelement in Kontakt gebracht werden (so dass auch das erste Verklebungssubstrat Teil des Vorverbunds ist) oder aber erst nach dem In-Kontaktbringen des Flächenelements mit dem zweiten Verklebungssubstrat in Kontakt gebracht werden (so dass das erste Verklebungssubstrat kein Teil des Vorverbunds wird).

Das Hindurchtreten der intrinsisch erwärmbaren Selbstklebemasse durch die Aussparungen des Kontaktierungselements kann dadurch unterstützt werden, dass der Vorverbund aus Flächenelement und Verklebungssubstrat zusammengepresst wird. Anstelle dessen oder zusätzlich kann der Vorverbund aus Flächenelement und Verklebungssubstrat erwärmt werden. Auf diese Weise tritt die Selbstklebemasse besonders zügig durch die Kontaktierungsschicht hindurch.

Alternativ kann ein Hindurchtreten aber auch ohne Einsatz des ersten Verklebungssubstrats erreicht werden, etwa, indem der Vorverbund mit dem zweiten Verklebungssubstrat nach unten angeordnet wird und die Selbstklebemasse von sich aus infolge der Einwirkung der Schwerkraft durch die Aussparungen im Kontaktierungselement hindurch fließt; dies setzt allerdings eine hinreichend niederviskose Selbstklebemasse sowie geeignete Aussparungen voraus. Ein der Wirkung der Erdschwerkraft ähnlicher Effekt ließe sich beispielsweise auch durch Verwendung einer Zentrifuge erreichen.

Schließlich wird die Vorderseite des Flächenelements über die durch die Aussparungen hindurchgetretene intrinsisch erwärmbare Selbstklebemasse an dem zweiten Verklebungssubstrat und damit auch mit dem zweiten Verklebungssubstrat verklebt.

Entsprechend der jeweils eingesetzten Selbstklebemasse kann das eigentliche Verkleben des Flächenelements unter Andruck an das Verklebungssubstrat (im Falle einer Haftklebemasse) oder aber bei Einbringen von Wärme erfolgen (im Falle einer Heißschmelzklebemasse), letzteres gegebenenfalls unter zusätzlichem Andruck des Flächenelements an das Verklebungssubstrat. Das Einbringen von Wärme erfolgt hierbei von außen; alternativ kann die zum Erzielen einer stabilen Verklebung erforderliche Wärme aber auch intrinsisch in der Heizschicht erzeugt werden.

Weitere Vorteile und Anwendungsmöglichkeiten gehen aus den Ausführungsbeispielen hervor, die anhand der beigefügten Zeichnungen im Folgenden näher beschrieben werden sollen. Dabei zeigt

Fig. 1 zu Illustrationszwecken schematische Darstellungen von Längsschnitten durch ein nicht erfindungsgemäßes Flächenelement

Fig. 2 zur Darstellung der Erfindung schematische Darstellungen von Längsschnitten durch ein erfindungsgemäßes Flächenelement gemäß einer ersten erfindungsgemäßen beispielhaften Ausbildung, und

Fig. 3 zur Darstellung der Erfindung schematische Darstellungen von Längsschnitten durch ein erfindungsgemäßes Flächenelement gemäß einer zweiten erfindungsgemäßen beispielhaften Ausbildung, wobei jeweils die obere Darstellung a) das Flächenelement im unverklebten Zustand (Lagerungszustand) und die untere Darstellung b) das Flächenelement im einseitig verklebten Zustand zeigt. Es zeigen ferner

Fig. 4 eine Draufsicht auf eine exemplarische räumliche Ausbildung des Kontaktierungselements,

Fig. 5 eine Draufsicht auf das in Fig. 4 wiedergegebene Kontaktierungselement, wobei in dieser Darstellung zusätzlich die stegförmigen Bereiche spezifiziert sind,

Fig. 6 eine Draufsicht auf eine weitere exemplarische räumliche Ausbildung des Kontaktierungselements,

Fig. 7 zu Illustrationszwecken schematische Darstellungen von Längsschnitten durch ein nicht erfindungsgemäßes Flächenelement gemäß Fig. 1 zu unterschiedlichen Zeitpunkten im Verlauf des Verklebens des Flächenelements an zwei Verklebungssubstraten entsprechend einer ersten Verfahrensführung,

Fig. 8 zu Illustrationszwecken schematische Darstellungen von Längsschnitten durch ein nicht erfindungsgemäßes Flächenelement gemäß Fig. 1 zu unterschiedlichen Zeitpunkten im Verlauf des Verklebens des Flächenelements an zwei Verklebungssubstraten entsprechend einer zweiten Verfahrensführung,

Fig. 9 zur Darstellung der Erfindung schematische Darstellungen von Längsschnitten durch ein erfindungsgemäßes Flächenelement gemäß der ersten erfindungsgemäßen beispielhaften Ausbildung vor und nach dem Verkleben des Flächenelements an zwei Verklebungssubstraten, und

Fig. 10 zur Darstellung der Erfindung schematische Darstellungen von Längsschnitten durch ein erfindungsgemäßes Flächenelement gemäß der zweiten erfindungsgemäßen beispielhaften Ausbildung vor und nach dem Verkleben des Flächenelements an zwei Verklebungssubstraten.

Jedes der in Folgenden exemplarisch beschriebenen Flächenelemente weist eine erwärmbare Selbstklebemasse 10 und ein Kontaktierungselement 20 auf.

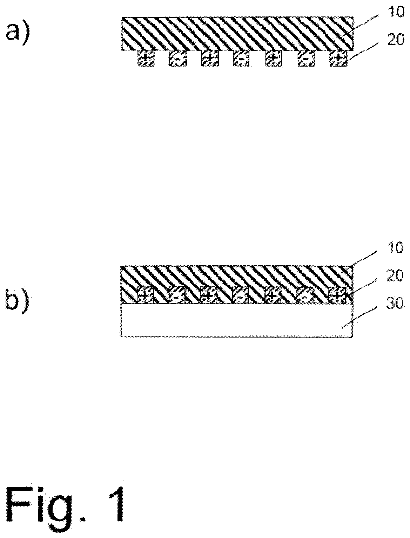

In Fig. 1 ist zu Illustrationszwecken ein nicht erfindungsgemäßes Flächenelement mit einer Selbstklebemasse 10, einem Kontaktierungselement 20 gemäß einer ersten beispielhaften Ausbildung dargestellt. Das Flächenelement weist keine stabilisierende Trägerfolie auf. Die Selbstklebemasse 10 ist entweder haftklebrig oder heißschmelzklebrig. Innerhalb der Selbstklebemasse 10 als Heizschicht wird bei einem Stromfluss Wärme erzeugt. Das Kontaktierungselement 20 dient als zwischen den Klebeschichtungen angeordnete diskontinuierliche elektrisch leitfähige Schicht der Kontaktierung der Selbstklebemasse 10.
Das Kontaktierungselement 20 weist eine Kammstruktur gleichmäßigen Querschnitts auf, wobei der eine Teilbereich des Kontaktierungselements 20 und der andere Teilbereich des Kontaktierungselements 20 nicht durchgängig miteinander verbunden sind, so dass jeder der beiden Teilbereiche als jeweils eine Kontaktelektrode der intrinsisch erwärmbaren Selbstklebemasse 10 dienen kann und das Kontaktierungselement 20 daher beide Kontaktelektroden (Pole) enthält (dargestellt durch die - willkürlich gewählten - unterschiedlichen Symbole "+" und "-"), weswegen eine externe Gegenelektrode nicht erforderlich ist. Im Zusammenwirken der beiden Teilbereiche des Kontaktierungselements 20 ergibt sich ein Stromfluss durch die Selbstklebemasse 10, der im Wesentlichen innerhalb der Ebene der Flächenausdehnung der Selbstklebemasse 10 verläuft (also in der xy-Ebene) und nur um ein Weniges senkrecht zu dieser.
Im Abschnitt a) von Fig. 1 ist ein Längsschnitt durch das nicht erfindungsgemäße Flächenelement im nicht verklebten Zustand gezeigt. Das Flächenelement ist so dargestellt, dass sich dessen Vorderseite an der unteren Seite des Flächenelements befindet und dass sich dessen Rückseite demzufolge an der oberen Seite des Flächenelements befindet. Die Vorderseite des Flächenelements wird von der unteren Seitenfläche der Kontaktierungsschicht als dessen zweite Seitenfläche gebildet. Die Kontaktierungsschicht umfasst das Kontaktierungselement 20 mit der Kammstruktur, wobei die Zinken des Kamms eine rechteckige Querschnittfläche besitzen. Das Kontaktierungselement 20 weist Aussparungen aus, die sich von der Vorderseite des Flächenelements zu der intrinsisch erwärmbaren Selbstklebemasse 10 hin durchgängig erstrecken. Mit der ersten Seitenfläche liegt das Kontaktierungselement 20 an der Schichtung aus der Selbstklebemasse 10 flach an. Die Aussparungen enthalten über die gesamte Dicke der Kontaktierungsschicht keine erwärmbare Selbstklebemasse 10 und sind somit nicht gefüllt, sondern liegen im Bereich der zweiten Seitenfläche klebemassefrei vor. Demzufolge ist die Vorderseite des Flächenelements in der in Abschnitt a) von Fig. 1 dargestellten Anordnung nicht selbstklebend; dies stellt den Lagerungszustand des erfindungsgemäßen Flächenelements dar.

Im Abschnitt b) von Fig. 1 ist ein Längsschnitt durch das in Abschnitt a) gezeigte Flächenelement dargestellt, wobei dieses im Unterschied zu der in Abschnitt a) gezeigten Situation im einseitig verklebten Zustand abgebildet ist, in dem das Flächenelement an dessen Vorderseite (untere Seite des Flächenelements) mit einem Verklebungssubstrat 30 verbunden ist. Hierfür ist die intrinsisch erwärmbare Selbstklebemasse 10 durch die Aussparungen in dem Kontaktierungselement 20 hindurchgetreten und füllt diese aus. Die hindurchgetretene Selbstklebemasse 10 haftet im Bereich der Aussparungen an dem Verklebungssubstrat 30 und bewirkt so die Verbindung zwischen dem Flächenelement und dem Verklebungssubstrat 30.

Lediglich der Vollständigkeit halber sei darauf hingewiesen, dass im Rahmen der Erfindung anstelle der zweipoligen Variante des Kontaktierungselements 20 dieses in der Schicht auch im Form von lediglich einer einzigen Kontaktelektrode vorliegen kann, die einen Stromfluss erst im Verbund mit einem Verklebungssubstrat erlaubt, an dem eine weitere Kontaktelektrode als externe Gegenelektrode angeordnet ist. Eine derartige externe Gegenelektrode kann etwa auf der Vorderseite des einen Verklebungssubstrats als dünne metallische Schicht aufgebracht sein. Im Zusammenwirken von Kontaktierungselement 20 und externer Gegenelektrode ist dann ein Stromfluss durch die Selbstklebemasse möglich, der im Wesentlichen senkrecht zur Flächenausdehnung der Selbstklebemasse verläuft (also in z-Richtung). Wenngleich im Folgenden ausschließlich die zweipoligen Varianten von exemplarischen Ausbildungen des erfindungsgemäßen Flächenelements beschrieben sind, so beinhaltet das erfinderische Konzept für alle diese Ausbildungen ebenfalls die einpoligen Varianten.

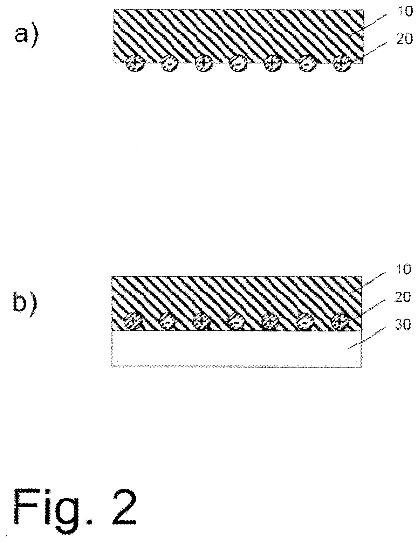

Das in Fig. 2 gezeigte erfindungsgemäße Flächenelement mit einer Selbstklebemasse 10 und einem Kontaktierungselement 20 gemäß einer ersten erfindungsgemäßen Ausbildung ist bis auf zwei Unterschiede mit dem zuvor beschriebenen Flächenelement gemäß der ersten Ausbildung identisch. In Abschnitt a) von Fig. 2 ist ein Längsschnitt durch das Flächenelement im Lagerungszustand dargestellt und in Abschnitt b) von Fig. 2 ist ein Längsschnitt durch das Flächenelement im einseitig verklebten Zustand an einem Verklebungssubstrat 30 abgebildet.

Ein Unterschied zu dem nicht erfindungsgemäßen Flächenelement gemäß Fig. 1 besteht darin, dass die Wände der Aussparungen nicht senkrecht zur Flächenausdehnung des Flächenelements verlaufen, sondern schräg zu dieser, so dass die Querschnittfläche der Zinken des Kontaktierungselements 20 keinen rechteckigen Querschnitt aufweist, sondern einen kreisähnlichen. Ein weiterer Unterschied zu dem Flächenelement gemäß Fig. 1 besteht darin, dass das Kontaktierungselement 20 nicht flach an der Selbstklebemasse 10 anliegt, sondern in diese teilweise eingebettet ist.

Hierdurch ergibt sich einerseits der Vorteil einer besseren Verankerung des Kontaktierungselements 20 in der Selbstklebemasse während der Lagerung. Dadurch, dass die Selbstklebemasse beim Verkleben die Zinken des Kontaktierungselements 20 umfließen kann, wird ferner die Verklebungsfläche vergrößert und somit die Festigkeit der Verklebung auf dem Verklebungssubstrat verbessert. Darüber setzt das Kontaktierungselement 20 der Selbstklebemasse infolge des günstigeren Profils der Aussparungen der Selbstklebemasse einen geringeren rheologischen Widerstand entgegen. Allerdings kann letzteres dazu führen, dass die Selbstklebemasse bereits bei der Lagerung durch die Aussparungen hindurchtreten kann, was ein unbeabsichtigtes Verkleben zur Folge haben könnte. Daher gelangt diese Ausbildung bevorzugt bei Verwendung von hochviskosen Selbstklebemassen zum Einsatz.

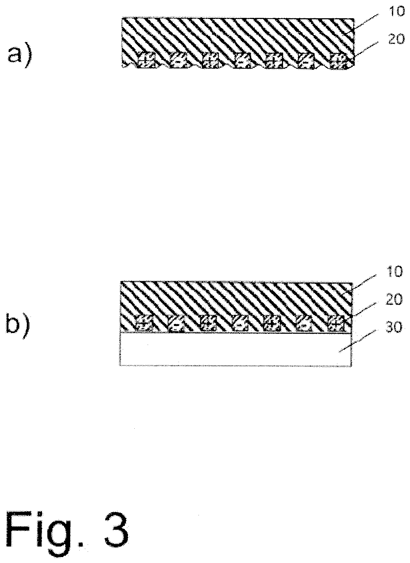

Das in Fig. 3 gezeigte erfindungsgemäße Flächenelement mit einer Selbstklebemasse 10 und einem Kontaktierungselement 20 gemäß einer zweiten erfindungsgemäßen Ausbildung ist bis auf einen Unterschied mit dem nicht erfindungsgemäßen Flächenelement gemäß Fig. 1 identisch. In Abschnitt a) von Fig. 3 ist ein Längsschnitt durch das Flächenelement im Lagerungszustand dargestellt und in Abschnitt b) von Fig. 3 ist ein Längsschnitt durch das Flächenelement im einseitig verklebten Zustand an einem Verklebungssubstrat 30 abgebildet.

Der Unterschied zu dem nicht erfindungsgemäßen Flächenelement gemäß Fig. 1 besteht darin, dass die Aussparungen in dem Kontaktierungselement 20 bereits im Lagerungszustand teilweise mit Selbstklebemasse 10 gefüllt sind, wobei die über die Dicke des Kontaktierungselements hindurch durchgängigen Aussparungen jedoch im Bereich der zweiten Seitenfläche der Kontaktierungsschicht klebemassefrei vorliegen.

Auch bei der zweiten erfindungsgemäßen Ausbildung ergibt sich der Vorteil einer besseren Verankerung des Kontaktierungselements 20 in der Selbstklebemasse während der Lagerung. Die Strecke, die die Selbstklebemasse 10 beim Verklebungsvorgang innerhalb der Aussparungen zurücklegen muss, um mit dem Verklebungssubstrat 30 in Kontakt zu treten, ist bei einem Flächenelement gemäß der dritten Ausbildung sehr klein. Daher ist es hier leichter, ein Verkleben zu bewirken, so dass ein Flächenelement gemäß der zweiten erfindungsgemäßen Ausbildung als intrinsisch erwärmbare Selbstklebemasse auch hochviskose Klebemassen enthalten kann.

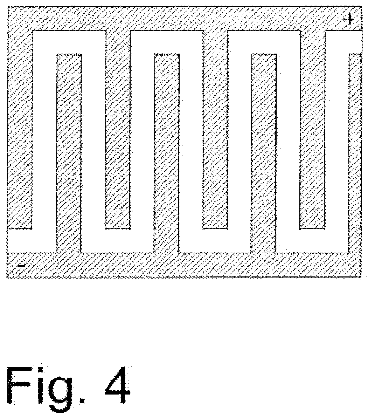

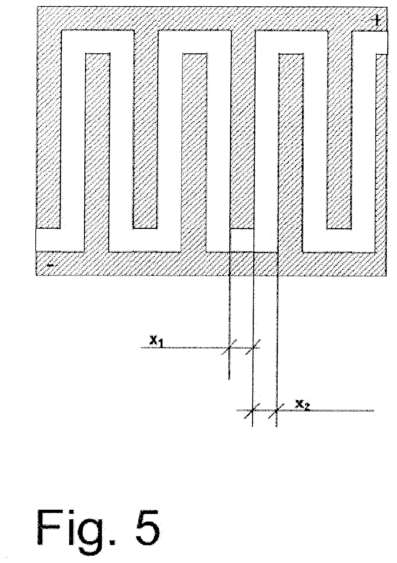

In Fig. 4 ist eine Draufsicht auf eine exemplarische räumliche Ausbildung des Kontaktierungselements wiedergegeben, das in einer Kammstruktur mit gleichmäßiger Breite der Zinken rechteckigen Querschnitts angeordnet ist. Das Kontaktierungselement umfasst hier zwei Teilbereiche, die nicht durchgängig miteinander verbunden sind, so dass jeder der beiden Teilbereiche als jeweils eine Kontaktelektrode der intrinsisch erwärmbaren ersten Selbstklebemasse dienen kann und das Kontaktierungselement daher beide Kontaktelektroden enthält (dargestellt durch die unterschiedlichen Symbole "+" und "-"). Fig. 5 zeigt eine Draufsicht auf dasselbe Kontaktierungselement, wobei in dieser Darstellung zusätzlich innerhalb der Kammstruktur die Breite $x_1$ der Zinken und die Breite $x_2$ der Aussparungen eingezeichnet sind. In einer üblichen Ausgestaltung können beispielsweise $x_1$ und $x_2$ Werte aus einem Bereich von 0,1 mm bis 10 mm annehmen, insbesondere von 0,5 mm bis 3 mm, so dass $x_1$ etwa einen Wert von 3 mm und $x_2$ etwa einen Wert von 1,5 mm besitzen kann.

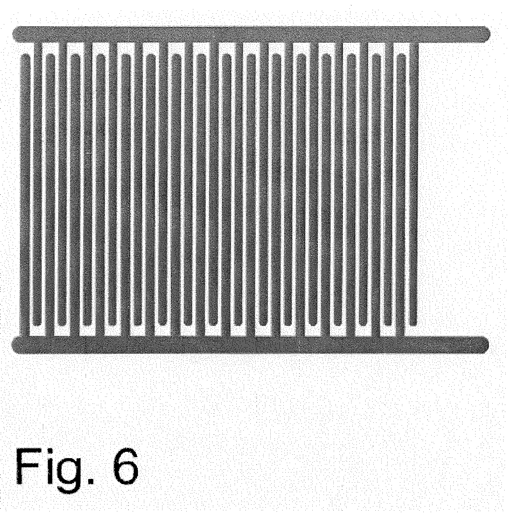

Eine Abwandlung der in Fig. 5 gezeigten räumlichen Ausbildung des Kontaktierungselements ist in Fig. 6 als Draufsicht wiedergegeben. Hierbei sind die Hauptstränge des Kontaktierungselements auf der rechten Seite über die beheizbare Fläche hinaus verlängert, so dass dort zwei Kontaktzungen gebildet werden, die zum Verbinden des Flächenelements mit externen Anschlussleitungen vorgesehen sind.

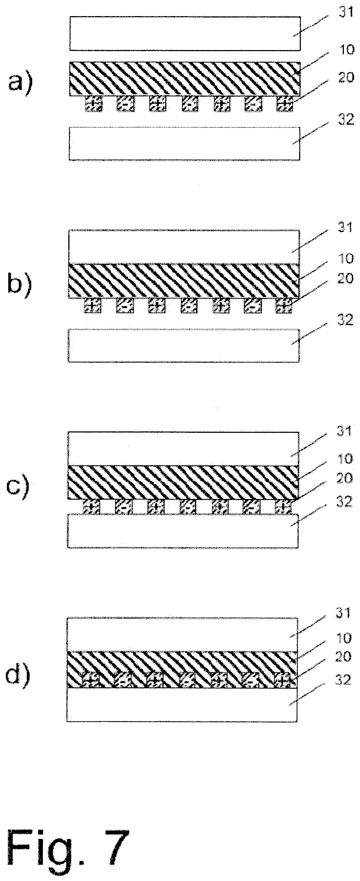

Die erfindungsgemäßen Flächenelemente werden mit einem Verklebungssubstrat oder mit zwei Verklebungssubstraten verbunden. Das Verfahren zum Verbinden kann beliebig geeignet durchgeführt werden. In Fig. 7 sind zunächst schematisch die unterschiedlichen Schritte beim Verkleben des in Fig. 1 dargestellten **nicht** erfindungsgemäßen, zu Illustrationszwecken dargestellten Flächenelements mit einer Selbstklebemasse 10 und einem Kontaktierungselement 20 an zwei Verklebungssubstraten, nämlich einem ersten Verklebungssubstrat 31 und einem zweiten Verklebungssubstrat 32, entsprechend einer ersten Verfahrensführung gezeigt.

Fig. 7 a) zeigt das Flächenelement vor dem Verbinden mit den zwei Verklebungssubstraten 31 und 32 und somit von diesen getrennt. In dem in Fig. 7 b) wiedergegebenen ersten Verbindungsschritt wird nun das erste Verklebungssubstrat 31 mit der Rückseite des Flächenelements in Kontakt gebracht, an der die Selbstklebemasse 10 vorliegt. Handelt es sich bei der Selbstklebemasse 10 um eine Haftklebemasse, so wird das Flächenelement mit dem ersten Verklebungssubstrat 31 verklebt. Handelt es sich bei der Selbstklebemasse 10 um eine Heißschmelzklebemasse, so kann - je nach Verfahrensführung - die Verklebung von dem Flächenelement mit dem ersten Verklebungssubstrat 31 bereits jetzt erfolgen oder erst später durchgeführt werden, etwa als kombinierter Verklebungsschritt, nachdem die Vorderseite des Flächenelements mit dem zweiten Verklebungssubstrat 32 in Kontakt gebracht worden ist.

Wie in Fig. 7 c) dargestellt, wird die Vorderseite des Flächenelements mit dem zweiten Verklebungssubstrat 32 in Kontakt gebracht. Da sich zu diesem Zeitpunkt die Selbstklebemasse 10 nicht in der Verbindungsebene zwischen dem Kontaktierungselement 20 und dem zweiten Verklebungssubstrat 32 befindet, kommt es dort noch nicht zu einer Verklebung. Im darauf folgenden Schritt, der in Fig. 7 d) gezeigt ist, tritt die Selbstklebemasse 10 durch die Aussparungen im Kontaktierungselement 20 hindurch und tritt in Kontakt mit dem zweiten Verklebungssubstrat 32, so dass es dort nunmehr zu einem Verkleben kommen kann.

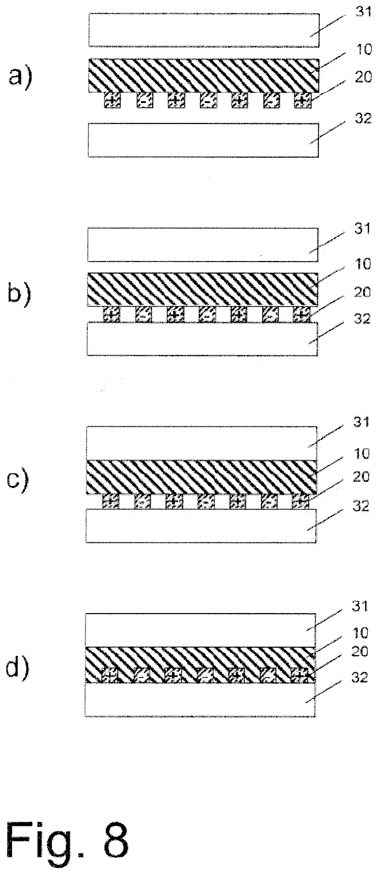

Eine Alternative zu dem in Fig. 7 dargestellten Ablauf beim Verkleben des in Fig. 1 dargestellten nicht erfindungsgemäßen Flächenelements mit einer Selbstklebemasse 10 und einem Kontaktierungselement 20 an einem ersten Verklebungssubstrat 31 und einem zweiten Verklebungssubstrat 32 zeigt Fig. 8. Hierbei ist Fig. 8 a) mit Fig. 7 a), Fig. 8 c) mit Fig. 7 c) und Fig. 8 d) mit Fig. 7 d) identisch, der Ablauf unterscheidet sich vielmehr darin, dass in dem in Fig. 8 b) wiedergegebenen ersten Verbindungsschritt zuerst das zweite Verklebungssubstrat 32 mit der Vorderseite des Flächenelements in Kontakt gebracht wird, bevor das Flächenelement mit dem ersten Verklebungssubstrat 31 in Kontakt gebracht wird. Da sich an der Vorderseite des Flächenelements lediglich das Kontaktierungselement 20 befindet, jedoch keine Selbstklebemasse 10, kommt es dabei noch nicht zu einem Verkleben, es bildet sich vielmehr ein loser Vorverbund aus.

Unter Beibehalten des losen Vorverbunds wird nun die Rückseite des Flächenelements mit dem ersten Verklebungssubstrat 31 in Kontakt gebracht (Fig. 8c)), die Selbstklebemasse 10 tritt durch die Aussparungen, und die beiden Verklebungssubstrate 31 und 32 werden mit dem Flächenelement verklebt. (Fig. 8 d)). Alternativ zu diesem Verfahren, das gegenüber dem in Fig. 7 dargestellten Ablauf quasi ungekehrt durchgeführt wird, können das erste Verklebungssubstrat 31 und das zweite Verklebungssubstrat 32 auch gleichzeitig mit dem Flächenelement in Kontakt gebracht werden.

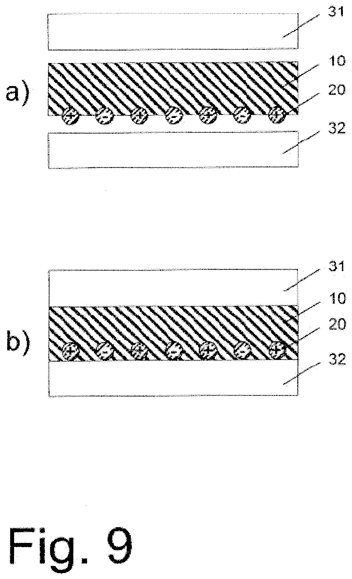

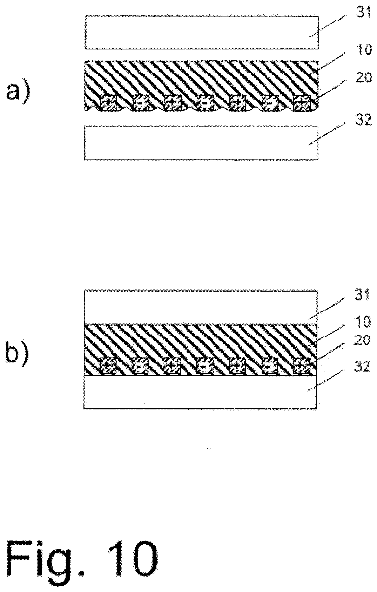

In Fig. 9 ist nun das erfindungsgemäße Flächenelement gemäß der ersten erfindungsgemäßen beispielhaften Ausbildung und in Fig. 10 das erfindungsgemäße Flächenelement gemäß der zweiten erfindungsgemäßen beispielhaften Ausbildung vor und nach dem Verkleben des Flächenelements an zwei Verklebungssubstraten 31 und 32 dargestellt. In beiden Verbindungsverfahren kann entweder zuerst das erste Verklebungssubstrat 31 und dann das zweite Verklebungssubstrat 32 mit dem Flächenelement in Kontakt gebracht werden oder zuerst das zweite Verklebungssubstrat 32 und dann das erste Verklebungssubstrat 31 mit dem Flächenelement in Kontakt gebracht werden, wobei natürlich auch beide Verklebungssubstrate 31 und 32 gleichzeitig mit dem Flächenelement in Kontakt gebracht werden können.

Ausgehend von einem Flächenelement mit mindestens einer haftklebrigen oder heißschmelzklebrigen Schicht, innerhalb derer Wärme erzeugt werden kann, und einer diskontinuierlich elektrisch leitfähigen Schicht, die zumindest einen Pol der Kontaktierungselektroden darstellt, kann demzufolge also beispielsweise das Flächenelement zuerst mit dem zweiten Verklebungssubstrat (etwa der Rückseite eines Fahrzeugspiegels) in Kontakt gebracht werden und dann entweder als loser Vorverbund auf das erste Verklebungssubstrat aufgelegt werden oder aber mit dem zweiten Verklebungssubstrat zuerst verbunden werden, bevor es mit dem ersten Verklebungssubstrat (etwa eine Spiegelhalteplatte) in Kontakt gebracht wird.

Der so erhaltene zumindest teilweise lose Vorverbund aus dem erfindungsgemäßen Flächenelement und den beiden Verklebungssubstraten kann nun in unterschiedlichen Verfahrensschritten zu dem festen Verbund zusammengefügt werden. So kann ein Hindurchtreten der Klebemasse durch die Aussparungen im Kontaktelement und ein Verkleben an der Außenseite des ersten Verklebungssubstrats erreicht werden, indem der Vorverbund für eine bestimmte Zeit mittels eines beheizten Stempels zusammengepresst wird. Nach Entfernen des Stempels und Abkühlen des Verbunds erhält man das Endprodukt aus zwei über ein beheizbares Flächenelement miteinander verbundenen Verklebungssubstraten.

Anstelle dessen können aber auch andere Verfahren zum Einsatz gelangen. So kann etwa ein Gewicht auf den Vorverbund aufgelegt werden, um das Hindurchtreten der Selbstklebemasse durch die Aussparungen zu beschleunigen. Stattdessen oder zusätzlich kann der Vorverbund für eine definierte Zeit in einen beheizten Raum (etwa einen Ofenraum) eingebracht werden. Das Endprodukt wird hier nach Herausnehmen und Abkühlen des Verbunds aus Substrat und Flächenelement und/oder Entfernen des Gewichts erhalten. Anstelle eines Gewichts oder eines Pressstempels kann eine Kraft aber auch aber auch auf beliebige andere geeignete Weise auf den Vorverbund einwirken. Anstelle des Einbringens in einen beheizten Raum kann ferner die Wärme auch durch das Flächenelement selbst erzeugt werden, beispielsweise durch Anlegen einer äußeren elektrischen Spannung an die Kontaktierungsschicht für eine definierte Zeit. Das Endprodukt wird hierbei ebenfalls nach Beendigung der Krafteinwirkung und/oder Abkühlen des erhaltenen Verbunds erhalten.

Für den Fall, dass ein Fahrzeugspiegel zu verkleben ist, so kann es günstig sein, das Flächenelement zuerst auf eine Spiegelhalteplatte aufzulegen. Auf das Flächenelement in dem so erhaltenen losen Vorverbund aus Spiegelhalteplatte und Flächenelement wird ein Spiegelglas aufgelegt und der so erhaltene Stapel aus Spiegelhalteplatte, Flächenelement und Spiegelglas wird dann verklebt, indem ein beheizter Stempel für eine bestimmte Zeit von der Spiegelglasseite her auf den Verbund einwirkt. Nach Entfernen des Stempels und Abkühlen wird als Endprodukt ein Verbund aus Spiegelhalteplatte, Flächenelement und Spiegelglas erhalten.

**Patentansprüche**

1. Flächenelement mit einer Vorderseite und einer Rückseite, das eine Heizschicht und eine Kontaktierungsschicht umfasst,

    wobei die Heizschicht aus einer intrinsisch erwärmbaren Selbstklebemasse (10) besteht, die als bei Hindurchleiten eines elektrischen Stroms sich erwärmender Leiter ausgebildet ist, und wobei die Kontaktierungsschicht als ein zumindest im Wesentlichen flächenförmig ausgebreitetes und von Aussparungen durchbrochenes Kontaktierungselement (20) ausgebildet ist und eine erste Seitenfläche sowie eine zweite Seitenfläche aufweist, wobei die Kontaktierungsschicht über die erste Seitenfläche mit der Heizschicht in Kontakt steht und mit dieser elektrisch leitend verbunden ist,

    **dadurch gekennzeichnet, dass**
    die zweite Seitenfläche der Kontaktierungsschicht die Vorderseite des Flächenelements bildet, dass die Aussparungen in dem Kontaktierungselement (20) über die Dicke des Kontaktierungselements (20) hindurch durchgängig ausgebildet sind und zumindest im Bereich der zweiten Seitenfläche klebemassefrei vorliegen
    und dass
    die erste Seitenfläche der Kontaktierungsschicht zumindest teilweise in die intrinsisch erwärmbare Selbstklebemasse (10) eingebettet ist.

2. Flächenelement nach Anspruch 1, **dadurch gekennzeichnet, dass** die intrinsisch erwärmbare Selbstklebemasse (10) ein Kaltleiter ist.

3. Flächenelement nach einem der vorangehenden Ansprüche, **dadurch gekennzeichnet, dass** die Dicke des Kontaktierungselements (20) höchstens 50 $\mu$m oder sogar weniger als 20 $\mu$m beträgt.

4. Flächenelement nach einem der vorangehenden Ansprüche, **dadurch gekennzeichnet, dass** die Aussparungen mindestens 25 % der Fläche der ersten Seitenfläche der Kontaktierungsschicht ausmachen, bevorzugt mehr als 50 % der Fläche der ersten Seitenfläche der Kontaktierungsschicht oder sogar mehr als 75 % der ersten Seitenfläche der Kontaktierungsschicht.

5. Flächenelement nach einem der vorangehenden Ansprüche, **dadurch gekennzeichnet, dass** das durchbrochene Kontaktierungselement (20) stegförmige Bereiche aufweist.

6. Flächenelement nach Anspruch 5, **dadurch gekennzeichnet, dass** die stegförmigen Bereiche eine Breite von höchstens 5 mm oder sogar von weniger als 1 mm aufweisen.

7. Flächenelement nach Anspruch 5 oder 6, **dadurch gekennzeichnet, dass** die stegförmigen Bereiche des durchbrochenen Kontaktierungselements (20) in einer verzweigten Kammstruktur oder Fingerstruktur vorliegen.

8. Flächenelement nach einem der vorangehenden Ansprüche, **dadurch gekennzeichnet, dass** die intrinsisch erwärmbare Selbstklebemasse (10) mindestens einen elektrisch leitenden Füllstoff umfasst.

9. Flächenelement nach Anspruch 8, **dadurch gekennzeichnet, dass** der elektrisch leitende Füllstoff ausgewählt ist aus der Gruppe umfassend Graphit, Kohlenstoff-Nanoteilchen und Ruß, insbesondere Leitruß.

10. Verfahren zum Verbinden eines Flächenelements nach einem der vorangehenden Ansprüche mit zumindest einem Verklebungssubstrat (30, 32), wobei das Verfahren die folgenden Schritte umfasst:

das Flächenelement wird mit einem Verklebungssubstrat (30, 32) derart in Kontakt gebracht, dass die zweite Seitenfläche der Kontaktierungsschicht einen Bereich der Oberfläche des Verklebungssubstrats (30, 32) berührt und so einen losen Vorverbund bildet, die intrinsisch erwärmbare Selbstklebemasse (10) tritt durch die Aussparungen des Kontaktierungselements (20) hindurch und füllt diese zumindest teilweise aus, und die Vorderseite des Flächenelements wird über die durch die Aussparungen hindurchgetretene intrinsisch erwärmbare Selbstklebemasse (10) an dem Verklebungssubstrat (30, 32) verklebt.

11. Verfahren nach Anspruch 10, **dadurch gekennzeichnet, dass** zum Hindurchtreten der intrinsisch erwärmbaren Selbstklebemasse (10) durch die Aussparungen des Kontaktierungselements (20) der Vorverbund aus Flächenelement und Verklebungssubstrat (30, 32) zusammengepresst wird.

12. Verfahren nach Anspruch 10 oder 11, **dadurch gekennzeichnet, dass** zum Hindurchtreten der intrinsisch erwärmbaren Selbstklebemasse (10) durch die Aussparungen des Kontaktierungselements (20) der Vorverbund aus Flächenelement und Verklebungssubstrat (30, 32) erwärmt wird.

13. Verfahren nach Anspruch 12, **dadurch gekennzeichnet, dass** der Vorverbund erwärmt wird, indem ein elektrischer Strom durch die intrinsisch erwärmbare Selbstklebemasse (10) hindurchgeleitet wird.

14. Verwendung eines Flächenelements nach einem der Ansprüche 1 bis 9 zum Beheizen eines Verklebungssubstrats.

## Claims

1. Planar element having an obverse and a reverse and comprising a heating layer and a contacting layer,

the heating layer being composed of an intrinsically heatable self-adhesive (10) which is designed as a conductor which heats up when an electric current is passed through, and the contacting layer being designed as an at least substantially two-dimensionally extended contacting element (20) which is perforated by cutouts, and having a first side face and a second side face, the contacting layer via the first side face being in contact with the heating layer and being in electrically conducting communication therewith,

**characterized in that** the second side face of the contacting layer forms the obverse of the planar element, **in that** the cutouts in the contacting element (20) are designed with passage through the thickness of the contacting element (20) and are present in adhesive-free form at least in the region of the second side face, and **in that** the first side face of the contacting layer is embedded at least partly in the intrinsically heatable self-adhesive (10).

2. Planar element according to Claim 1, **characterized in that** the intrinsically heatable self-adhesive (10) is a posistor.

3. Planar element according to any of the preceding claims, **characterized in that** the thickness of the contacting element (20) is not more than 50 $\mu$m or even less than 20 $\mu$m.

4. Planar element according to any of the preceding claims, **characterized in that** the cutouts make up at least 25% of the area of the first side face of the contacting layer, preferably more than 50% of the area of the first side face of the contacting layer or even more than 75% of the first side face of the contacting layer.

5. Planar element according to any of the preceding claims, **characterized in that** the perforated contacting element (20) has bridge-like regions.

6. Planar element according to Claim 5, **characterized**

**in that** the bridge-like regions have a width of not more than 5 mm or even of less than 1 mm.

7. Planar element according to Claim 5 or 6, **characterized in that** the bridge-like regions of the perforated contacting element (20) are present in a branched comb structure or finger structure.

8. Planar element according to any of the preceding claims, **characterized in that** the intrinsically heatable self-adhesive (10) comprises at least one electrically conducting filler.

9. Planar element according to Claim 8, **characterized in that** the electrically conducting filler is selected from the group encompassing graphite, carbon nanoparticles and carbon black, more particularly conductive carbon black.

10. Method of joining a planar element according to any of the preceding claims to at least one bonding substrate (30, 32), the method comprising the following steps:

  the planar element is contacted with a bonding substrate (30, 32) in such a way that the second side face of the contacting layer touches a region of the surface of the bonding substrate (30, 32) and so forms a loose preassembly,
  the intrinsically heatable self-adhesive (10) passes through the cutouts in the contacting element (20) and at least partly fills them, and
  the obverse of the planar element is bonded to the bonding substrate (30, 32) via the intrinsically heatable self-adhesive (10) which has passed through the cutouts.

11. Method according to Claim 10, **characterized in that**, for the passage of the intrinsically heatable self-adhesive (10) through the cutouts in the contacting element (20), the preassembly composed of planar element and bonding substrate (30, 32) is pressed together.

12. Method according to Claim 10 or 11, **characterized in that**, for the passage of the intrinsically heatable self-adhesive (10) through the cutouts in the contacting element (20), the preassembly composed of planar element and bonding substrate (30, 32) is heated.

13. Method according to Claim 12, **characterized in that** the preassembly is heated by passing an electric current through the intrinsically heatable self-adhesive (10).

14. Use of a planar element according to any of Claims 1 to 9 for heating a bonding substrate.

**Revendications**

1. Élément de surface avec une face avant et une face arrière et comprenant une couche de chauffage et une couche de mise en contact,
   selon lequel la couche de chauffage est constituée d'une masse autoadhésive (10) pouvant être chauffée de manière intrinsèque et qui est conçue sous la forme d'un conducteur auto-chauffant lors du passage d'un courant électrique ; et
   selon lequel la couche de mise en contact est conçue sous la forme d'un élément de mise en contact (20) marqué par des évidements et est étendue, tout au moins pour l'essentiel, en forme de feuille et laquelle couche de mise en contact présente une première surface latérale ainsi qu'une deuxième surface latérale, où la couche de mise en contact se trouve en contact avec la couche de chauffage par l'intermédiaire de la première surface latérale et est reliée à celle-ci de manière électro-conductrice,
   **caractérisé en ce que**
   la deuxième surface latérale de la couche de mise en contact forme la face avant de l'élément de surface ; **caractérisé en ce que**
   les évidements sont conçus systématiquement de manière continue dans l'élément de mise en contact (20) à travers l'épaisseur de 1"élément de mise en contact (20) et sont présents tout au moins dans la zone de la deuxième surface latérale, en étant dépourvus de masse adhésive ; et
   **caractérisé en ce que**
   la première surface latérale de la couche de mise en contact est intégrée, tout au moins en partie, dans la masse autoadhésive (10) pouvant être chauffée de manière intrinsèque.

2. Élément de surface selon la revendication 1, **caractérisé en ce que** la masse autoadhésive (10) pouvant être chauffée de manière intrinsèque est un conducteur à froid.

3. Élément de surface selon l'une des revendications précédentes, **caractérisé en ce que** l'épaisseur de l'élément de mise en contact (20) s'élève à 50 μm au plus, voire est même inférieure à 20 μm.

4. Élément de surface selon l'une des revendications précédentes, **caractérisé en ce que** les évidements correspondent à au moins 25 % de la surface de la première surface latérale de la couche de mise en contact, de préférence à plus de 50 % de la surface de la première surface latérale de la couche de mise en contact ou voire même à plus de 75 % de la première surface latérale de la couche de mise en contact.

5. Élément de surface selon l'une des revendications précédentes, **caractérisé en ce que** l'élément de mise en contact (20) marqué par des évidements présente des zones en forme de nervures.

**6.** Élément de surface selon la revendication 5, **caractérisé en ce que** les zones en forme de nervures présentent une largeur de 5 mm au plus, voire même inférieure à 1 mm.

**7.** Élément de surface selon la revendication 5 ou 6, **caractérisé en ce que** les zones en forme de nervure de l'élément de mise en contact (20) marqué par des évidements sont présentes dans une structure ramifiée en forme de peigne ou en forme de doigts.

**8.** Élément de surface selon l'une des revendications précédentes, **caractérisé en ce que** la masse autoadhésive (10) pouvant être chauffée de manière intrinsèque comprend au moins une matière de remplissage électro-conductrice.

**9.** Élément de surface selon la revendication 8, **caractérisé en ce que** la matière de remplissage électro-conductrice est sélectionnée parmi le groupe comprenant du graphite, des nanoparticules de carbone et du noir de carbone, en particulier du noir de carbone conducteur.

**10.** Procédé destiné à la jonction d'un élément de surface selon l'une des revendications précédentes, avec tout au moins un substrat de collage (30, 32), ledit procédé comprenant les étapes suivantes :

- l'élément de surface est mis en contact avec un substrat de collage (30, 32), de telle sorte que la deuxième surface latérale de la couche de mise en contact touche une zone de la surface du substrat de collage (30, 32) et forme ainsi une liaison préalable libre ;
- la masse autoadhésive (10) pouvant être chauffée de manière intrinsèque pénètre à travers les évidements de l'élément de mise en contact (20) et remplit ces derniers, tout au moins en partie ; et
- la face avant de l'élément de surface est collée au substrat de collage (30, 32) par l'intermédiaire de la masse autoadhésive (10) pouvant être chauffée de manière intrinsèque, laquelle a traversé les évidements.

**11.** Procédé selon la revendication 10, **caractérisé en ce que** la liaison préalable, laquelle est composée de l'élément de surface et du substrat de collage (30, 32), est compressée en vue de la pénétration de la masse autoadhésive (10), pouvant être chauffée de manière intrinsèque, à travers les évidements de l'élément de mise en contact (20).

**12.** Procédé selon la revendication 10 ou 11, **caractérisé en ce que** la liaison préalable, laquelle est composée de l'élément de surface et du substrat de collage (30, 32), est chauffée en vue de la pénétration de la masse autoadhésive (10), pouvant être chauffée de manière intrinsèque, à travers les évidements de l'élément de mise en contact (20).

**13.** Procédé selon la revendication 12, **caractérisé en ce que** la liaison préalable est chauffée, en ce sens qu'un courant électrique est appliqué à travers la masse autoadhésive (10) pouvant être chauffée de manière intrinsèque.

**14.** Utilisation d'un élément de surface selon l'une des revendications 1 à 9 en vue du chauffage d'un substrat de collage.

a)

10

20

b)

10

20

30

# Fig. 1

a)

10
20

b)

10
20
30

# Fig. 2

a)

10
20

b)

10
20
30

# Fig. 3

# Fig. 4

Fig. 5

Fig. 6

Fig. 7

# Fig. 8

Fig. 9

a)

31

10

20

32

b)

31

10

20

32

# Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10310722 A1
- DE 102007007617 A
- EP 2148337 A
- DE 2948350 A1
- EP 0307205 A1
- EP 0512703 A1
- EP 0852801 A1
- EP 0435923 A1
- EP 0311142 A1
- US 4775778 A

**In der Beschreibung aufgeführte Nicht-Patentliteratur**

- **J. MEYER.** *Polymer Engineering and Science,* 1973, vol. 13, 462-468
- **T.G. FOX.** *Bull. Am. Phys. Soc.,* 1956, vol. 1, 123
- *Electron Beam Processing, in Chemistry and Technology of UV and EB Formulation for Coatings, Inks and Paints,* 1991, vol. 1